# EUROPEAN PATENT SPECIFICATION

(11) **EP 3 584 871 B1**
(45) Date of publication and mention of the grant of the patent: **16.08.2023**
(21) Application number: 18754812.8
(22) Date of filing: 14.02.2018
(51) Int. Cl.: H01M 10/0562, H01B 1/06, H01M 4/13, H01M 4/139, H01M 4/62, H01M 10/058

(54) **SOLID ELECTROLYTE COMPOSITION, SOLID ELECTROLYTE-CONTAINING SHEET, ALL-SOLID-STATE SECONDARY BATTERY, METHOD FOR PRODUCING SOLID ELECTROLYTE-CONTAINING SHEET, AND METHOD FOR PRODUCING ALL-SOLID-STATE SECONDARY BATTERY**
FESTELEKTROLYTZUSAMMENSETZUNG, FESTELEKTROLYTHALTIGE SCHICHT, FESTKÖRPERSEKUNDÄRBATTERIE, VERFAHREN ZUR HERSTELLUNG EINER FESTELEKTROLYTHALTIGEN SCHICHT UND VERFAHREN ZUR HERSTELLUNG EINER FESTKÖRPERSEKUNDÄRBATTERIE
COMPOSITION D'ÉLECTROLYTE SOLIDE, FEUILLE CONTENANT UN ÉLECTROLYTE SOLIDE, BATTERIE SECONDAIRE ENTIÈREMENT SOLIDE, PROCÉDÉ DE PRODUCTION D'UNE FEUILLE CONTENANT UN ÉLECTROLYTE SOLIDE, ET PROCÉDÉ DE PRODUCTION D'UNE BATTERIE SECONDAIRE ENTIÈREMENT SOLIDE

(30) Priority: 16.02.2017 JP 2017027332; 09.06.2017 JP 2017114186
(43) Date of publication of application: 25.12.2019
(73) Proprietor: FUJIFILM Corporation, Tokyo 106-8620 (JP)
(72) Inventor: KUSHIDA, Yo, Ashigarakami-gun Kanagawa 258-8577 (JP); MAKINO, Masaomi, Ashigarakami-gun Kanagawa 258-8577 (JP); MIMURA, Tomonori, Ashigarakami-gun Kanagawa 258-8577 (JP); MOCHIZUKI, Hiroaki, Ashigarakami-gun Kanagawa 258-8577 (JP)
(74) Representative: Hoffmann Eitle
(86) International application number: PCT/JP2018/004951
(87) International publication number: WO 2018/151119

(56) References cited:
- WO-A1-2015/046313
- JP-A- 2011 054 439
- JP-A- 2014 194 981
- JP-A- 2016 115 632
- JP-A- 2016 115 632

## Description

### BACKGROUND OF THE INVENTION

### 1. Field of the Invention

The present invention relates to a solid electrolyte composition, a solid electrolyte-containing sheet, an all-solid state secondary battery, and methods for manufacturing a solid electrolyte-containing sheet and an all-solid state secondary battery.

### 2. Description of the Related Art

A lithium ion secondary battery is a storage battery which has a negative electrode, a positive electrode and an electrolyte sandwiched between the negative electrode and the positive electrode and enables charging and discharging by the reciprocal migration of lithium ions between both electrodes. In the related art, in lithium ion secondary batteries, an organic electrolytic solution has been used as the electrolyte. However, in organic electrolytic solutions, liquid leakage is likely to occur, there is a concern that a short circuit and ignition may be caused in batteries due to overcharging or overdischarging, and there is a demand for additional improvement in safety and reliability.

Under such circumstances, all-solid state secondary batteries in which an inorganic solid electrolyte is used instead of the organic electrolytic solution are attracting attention. In all-solid state secondary batteries, all of the negative electrode, the electrolyte, and the positive electrode are solid, safety and reliability which are considered as a problem of batteries in which the organic electrolytic solution is used can be significantly improved, and it also becomes possible to extend service lives. Furthermore, all-solid state secondary batteries can be provided with a structure in which the electrodes and the electrolyte are directly disposed in series. Therefore, it becomes possible to increase the energy density to be higher than that of secondary batteries in which the organic electrolytic solution is used, and thus the application to electric vehicles, large-sized storage batteries, and the like is anticipated.

Due to the above-described respective advantages, research and development is actively underway for the practical use of all-solid state secondary batteries as next-generation lithium ion batteries, and a number of techniques for improving the performance of all-solid state secondary batteries have been reported.

All-solid state secondary batteries can be increased in power by providing a power generation element in a laminate structure. Generally, the laminate structure is formed by providing a positive electrode layer and a negative electrode layer on the front and rear of a collector. It is known that a spacer is provided between a collector and a collector in order to prevent short circuit by the contact between the collectors in the laminate structure. For example, JP2011-100693A discloses a technique in which, in a lamination-type battery, a spacer is disposed at an outer circumference of a location at which a power generation portion is disposed on one surface side of a collector, and a recess portion is formed at a location corresponding to the disposition location of the spacer on the other surface side, thereby facilitating location determination during the lamination of electrode bodies and, in the case of subjecting the battery to a press step, preventing the location deviation of the electrode bodies by fitting the spacer.

### SUMMARY OF THE INVENTION

As a method for manufacturing an all-solid state secondary battery, there is a case in which the production of a solid electrolyte-containing sheet (a solid electrolyte layer and an electrode active material layer) and the manufacturing of an all-solid state secondary battery into which the solid electrolyte-containing sheet has been combined are separated carried out. That is, there is a case in which the solid electrolyte-containing sheet is produced and then stored for a certain period of time, and then an all-solid state secondary battery is produced using the solid electrolyte-containing sheet. In this case, it is necessary to produce the solid electrolyte-containing sheet in a roll-to-roll manner and send the wound solid electrolyte sheet to an assembly place of the all-solid state secondary battery. However, in a step of winding the solid electrolyte-containing sheet or a step of sending the wound solid electrolyte-containing sheet, there is a case in which the sheet deteriorates due to friction with another sheet, and there is a concern that an all-solid state secondary battery having desired performance cannot be obtained. This problem is an important problem that needs to be solved in terms of the industrial production of all-solid state secondary batteries.

An object of the present invention is to provide a solid electrolyte composition that is used for solid electrolyte-containing sheets or all-solid state secondary batteries and, by being used as a material that constitutes a solid electrolyte-containing sheet, improves a bonding property between solid particles of an inorganic solid electrolyte and the like in the solid electrolyte-containing sheet to be obtained and improve scratch resistance. In addition, another object of the present invention is to provide a solid electrolyte-containing sheet in which the solid electrolyte composition is used and an all-solid state secondary battery in which the solid electrolyte-containing sheet is used. Furthermore, still another object of the present invention is to provide methods for manufacturing the solid electrolyte-containing sheet and the all-solid state secondary battery.

As a result of intensive studies, the present inventors found that an excellent bonding property and excellent scratch resistance can be provided to a solid electrolyte-containing sheet produced using a solid electrolyte composition containing an inorganic solid electrolyte and a binder in which a polymer exhibiting a specific Young's modulus and a specific breaking elongation is employed as the binder. The present invention was completed by repeating additional studies on the basis of the above-described finding.

The above-described objects are achieved by the following means.
<1> A solid electrolyte composition comprising: an inorganic solid electrolyte (A) having a conductivity of an ion of a metal belonging to Group I or II of the periodic table; and a binder (B), in which the binder (B) includes a polymer satisfying the following condition (1) or (2), wherein the polymer included in the binder (B) is selected from the group consisting of polyurethane, polyester, acrylic polymer, polycarbonate, a hydrogenated acrylonitrile butadiene rubber and a polyamide.
(Condition 1) A Young's modulus is 0.003 GPa or more and less than 0.2 GPa and a breaking elongation is 300% to 700%
(Condition 2) A Young's modulus is 0.2 to 2 GPa and a breaking elongation is 10% to 1,000%
<2> The solid electrolyte composition according to <1>, in which the polymer satisfies the following condition 3.
(Condition 3) A Young's modulus is 0.2 to 2 GPa and a breaking elongation is 300% to 700%
<3> The solid electrolyte composition according to <1> or <2>, in which a yield elongation of the polymer is 10% or more.
<4> The solid electrolyte composition according to any one of <1> to <3>, further comprising: an active material (C).
<5> The solid electrolyte composition according to any one of <1> to <4>, further comprising: a dispersion medium (D).
<6> A solid electrolyte-containing sheet comprising: an inorganic solid electrolyte (A) having a conductivity of an ion of a metal belonging to Group I or II of the periodic table; and a binder (B), in which the binder (B) includes a polymer satisfying the following condition (1) or (2), wherein the polymer included in the binder (B) is selected from the group consisting of polyurethane, polyester, acrylic polymer, polycarbonate, a hydrogenated acrylonitrile butadiene rubber and a polyamide.
(Condition 1) A Young's modulus is 0.003 GPa or more and less than 0.2 GPa and a breaking elongation is 300% to 700%
(Condition 2) A Young's modulus is 0.2 to 2 GPa and a breaking elongation is 10% to 1,000%
<7> The solid electrolyte-containing sheet according to <6>, further comprising: an active material (C).
<8> An all-solid state secondary battery comprising: a positive electrode active material layer; a negative electrode active material layer; and a solid electrolyte layer, in which at least one layer of the positive electrode active material layer, the negative electrode active material layer, or the solid electrolyte layer is the solid electrolyte-containing sheet according to <6> or <7>.
<9> A method for manufacturing a solid electrolyte-containing sheet, the method comprising: a step of applying the solid electrolyte composition according to any one of <1> to <5> on a base material.
<10> A method for manufacturing an all-solid state secondary battery, the method comprising: manufacturing an all-solid state secondary battery using the manufacturing method according to <9>.

In the present specification, in a case in which there is a plurality of substituents and linking groups represented by a specific reference sign or a case in which a plurality of substituents or the like (similarly, the numbers of substituent) is simultaneously or selectively regulated, the respective substituents or the like may be identical to or different from each other. In addition, in a case in which a plurality of substituents or the like is close to each other, the substituent or the like may bond or condense together to form a ring.

In the present specification, a weight-average molecular weight (Mw) can be measured as a polystyrene-equivalent molecular weight by means of GPC unless particularly otherwise described. At this time, a GPC apparatus HLC-8220 (manufactured by Tosoh Corporation) is used, G3000HXL+G2000HXL is used as a column, a flow rate at 23°C is 1 mL/min, and the molecular weight is detected by RI. An eluent can be selected from tetrahydrofuran (THF), chloroform, N-methyl-2-pyrrolidone (NMP), and m-cresol/chloroform (manufactured by Shonanwako Junyaku KK), and THF is used in a case in which a subject needs to be dissolved.

In the present specification, unless particularly otherwise described, the glass transition temperature (Tg) is measured using a dried specimen and a differential scanning calorimeter "X-DSC7000" (trade name, manufactured by SII·NanoTechnology Inc.) under the following conditions. The glass transition temperature of the same specimen is measured twice, and the measurement result of the second measurement is employed.
Atmosphere of the measurement chamber: Nitrogen (50 mL/min)
Temperature-increase rate: 5°C/min
Measurement-start temperature: -100°C
Measurement-end temperature: 200°C
Specimen pan: Aluminum pan
Mass of the measurement specimen: 5 mg
Calculation of Tg: Tg is calculated by rounding off decimal points of the middle temperature between the declination-start point and the declination-end point in the DSC chart to the integer.

In the case of being used to produce a solid electrolyte-containing sheet, the solid electrolyte composition of an embodiment of the present invention is capable of improving the bonding property and the scratch resistance of the solid electrolyte-containing sheet. In addition, the solid electrolyte-containing sheet of an embodiment of the present invention is excellent in terms of a bonding property between solid particles of an inorganic solid electrolyte or the like and scratch resistance. In addition, according to the present invention, it is possible to provide an all-solid state secondary battery having the above-described solid electrolyte-containing sheet having excellent physical properties. Furthermore, according to the method for manufacturing a solid electrolyte-containing sheet and the method for manufacturing an all-solid state secondary battery of the embodiment of the present invention, it is possible to provide a solid electrolyte-containing sheet and an all-solid state secondary battery that are excellent in terms of physical properties or performance.

### BRIEF DESCRIPTION OF THE DRAWINGS

Fig. 1 is a vertical cross-sectional view schematically illustrating an all-solid state secondary battery according to a preferred embodiment of the present invention.
Figs. 2A and 2B are views illustrating Young's moduli, breaking elongations, and yield elongations on stress-strain curves.
Fig. 3 is a chart illustrating elastic moduli, breaking elongations, and measurement results of polymers used in examples.

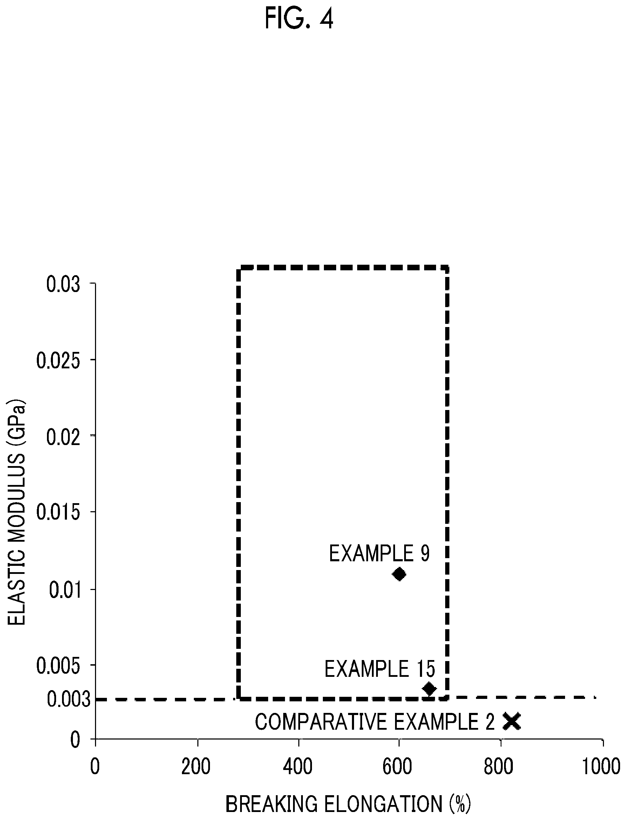

Fig. 4 is an enlarged view of Fig. 4.

### DESCRIPTION OF THE PREFERRED EMBODIMENTS

### <Preferred embodiment>

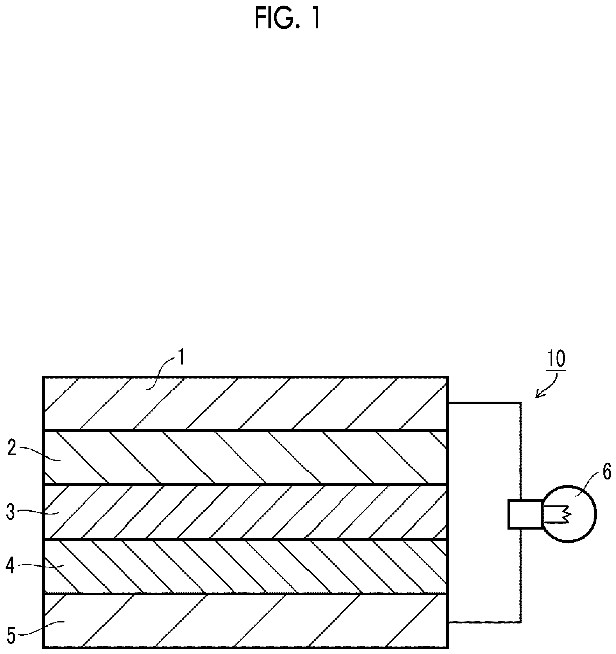

Fig. 1 is a cross-sectional view schematically illustrating an all-solid state secondary battery (lithium ion secondary battery) according to a preferred embodiment of the present invention. In the case of being seen from the negative electrode side, an all-solid state secondary battery 10 of the present embodiment has a negative electrode collector 1, a negative electrode active material layer 2, a solid electrolyte layer 3, a positive electrode active material layer 4, and a positive electrode collector 5 in this order. The respective layers are in contact with each other and have a laminated structure. In a case in which the above-described structure is employed, during charging, electrons (e⁻) are supplied to the negative electrode side, and lithium ions (Li⁺) are accumulated on the negative electrode side. On the other hand, during discharging, the lithium ions (Li⁺) accumulated on the negative electrode side return to the positive electrode, and electrons are supplied to an operation portion 6. In an example illustrated in the drawing, an electric bulb is employed as the operation portion 6 and is lit by discharging. A solid electrolyte composition of an embodiment of the present invention can be preferably used as a material used to shape the negative electrode active material layer, the positive electrode active material layer, and the solid electrolyte layer. In addition, a solid electrolyte-containing sheet of an embodiment of the present invention is preferred as the negative electrode active material layer, the positive electrode active material layer, and the solid electrolyte layer.

In the present specification, the positive electrode active material layer (hereinafter, also referred to as the positive electrode layer) and the negative electrode active material layer (hereinafter, also referred to as the negative electrode layer) will be collectively referred to as the electrode layer or the active material layer in some cases.

The thicknesses of the positive electrode active material layer 4, the solid electrolyte layer 3, and the negative electrode active material layer 2 are not particularly limited. Meanwhile, in a case in which the dimensions of ordinary batteries are taken into account, the thicknesses are preferably 10 to 1,000 µm and more preferably 20 µm or more and less than 500 µm. In the all-solid state secondary battery of the embodiment of the present invention, the thickness of at least one layer of the positive electrode active material layer 4, the solid electrolyte layer 3, or the negative electrode active material layer 2 is still more preferably 50 µm or more and less than 500 µm.

### <Solid electrolyte composition>

The solid electrolyte composition of the embodiment of the present invention contains an inorganic solid electrolyte (A) having a conductivity of an ion of a metal belonging to Group I or II of the periodic table and a binder (B), and the binder (B) includes a polymer satisfying the following condition (1) or (2).
(Condition 1) A Young's modulus is 0.003 GPa or more and less than 0.2 GPa and a breaking elongation is 300% to 700%
(Condition 2) A Young's modulus is 0.2 to 2 GPa and a breaking elongation is 10% to 1,000%

Hereinafter, the inorganic solid electrolyte (A) having a conductivity of an ion of a metal belonging to Group I or II of the periodic table will also be referred to simply as the inorganic solid electrolyte (A). In addition, the components that are contained in the solid electrolyte composition or components that may be contained in the solid electrolyte composition are also expressed without any reference sign in some cases. For example, the binder (B) will be simply expressed as the binder in some cases.

### (Inorganic solid electrolyte (A))

The inorganic solid electrolyte is an inorganic solid electrolyte, and the solid electrolyte refers to a solid-form electrolyte capable of migrating ions therein. The inorganic solid electrolyte is clearly differentiated from organic solid electrolytes (high-molecular-weight electrolytes represented by polyethylene oxide (PEO) or the like and organic electrolyte salts represented by lithium bis(trifluoromethanesulfonyl)imide (LiTFSI)) since the inorganic solid electrolyte does not include any organic substances as a principal ion-conductive material. In addition, the inorganic solid electrolyte is a solid in a static state and is thus, generally, not disassociated or liberated into cations and anions. Due to this fact, the inorganic solid electrolyte is also clearly differentiated from inorganic electrolyte salts of which cations and anions are disassociated or liberated in electrolytic solutions or polymers (LiPF₆, LiBF₄, LiFSI, LiCl, and the like). The inorganic solid electrolyte is not particularly limited as long as the inorganic solid electrolyte has conductivity of ions of metals belonging to Group I or II of the periodic table and is generally a substance not having electron conductivity.

In the present invention, the inorganic solid electrolyte has conductivity of ions of metals belonging to Group I or II of the periodic table. As the inorganic solid electrolyte, it is possible to appropriately select and use solid electrolyte materials that are applied to this kind of products. Typical examples of the inorganic solid electrolyte include (i) sulfide-based inorganic solid electrolytes and (ii) oxide-based inorganic solid electrolytes. In the present invention, the sulfide-based inorganic solid electrolytes are preferably used since it is possible to form a more favorable interface between the active material and the inorganic solid electrolyte.

### (i) Sulfide-based inorganic solid electrolytes

Sulfide-based inorganic solid electrolytes are preferably inorganic solid electrolytes which contain sulfur atoms (S), have ion conductivity of metals belonging to Group I or II of the periodic table, and have electron-insulating properties. The sulfide-based inorganic solid electrolytes are preferably inorganic solid electrolytes which, as elements, contain at least Li, S, and P and have a lithium ion conductivity, but the sulfide-based inorganic solid electrolytes may also include elements other than Li, S, and P depending on the purposes or cases.

Examples thereof include lithium ion-conductive inorganic solid electrolytes satisfying a composition represented by Formula (I).

Lₐ₁M_{b1}P_{c1}S_{d1}Aₑ₁ Formula (I)

In the formula, L represents an element selected from Li, Na, and K and is preferably Li. M represents an element selected from B, Zn, Sn, Si, Cu, Ga, Sb, Al, and Ge. A represents an element selected from I, Br, Cl, and F. a1 to e1 represent the compositional ratios among the respective elements, and a1:b1:c1:d1:e1 satisfies 1 to 12:0 to 5:1:2 to 12:0 to 10. Furthermore, a1 is preferably 1 to 9 and more preferably 1.5 to 7.5. b1 is preferably 0 to 3. Furthermore, d1 is preferably 2.5 to 10 and more preferably 3.0 to 8.5. Furthermore, e1 is preferably 0 to 5 and more preferably 0 to 3.

The compositional ratios among the respective elements can be controlled by adjusting the amounts of raw material compounds blended to manufacture the sulfide-based inorganic solid electrolyte as described below.

The sulfide-based inorganic solid electrolytes may be non-crystalline (glass) or crystallized (made into glass ceramic) or may be only partially crystallized. For example, it is possible to use Li-P-S-based glass containing Li, P, and S or Li-P-S-based glass ceramic containing Li, P, and S.

The sulfide-based inorganic solid electrolytes can be manufactured by a reaction of at least two raw materials of, for example, lithium sulfide (Li₂S), phosphorus sulfide (for example, diphosphorus pentasulfide (P₂S₅)), a phosphorus single body, a sulfur single body, sodium sulfide, hydrogen sulfide, lithium halides (for example, Lil, LiBr, and LiCl), or sulfides of an element represented by M (for example, SiS₂, SnS, and GeS₂).

The ratio between Li₂S and P₂S₅ in Li-P-S-based glass and Li-P-S-based glass ceramic is preferably 60:40 to 90:10 and more preferably 68:32 to 78:22 in terms of the molar ratio between Li₂S:P₂S₅. In a case in which the ratio between Li₂S and P₂S₅ is set in the above-described range, it is possible to increase the lithium ion conductivity. Specifically, the lithium ion conductivity can be preferably set to 1 × 10⁻⁴ S/cm or more and more preferably set to 1 × 10⁻³ S/cm or more. The upper limit is not particularly limited, but realistically 1 × 10⁻¹ S/cm or less.

As specific examples of the sulfide-based inorganic solid electrolytes, combination examples of raw materials will be described below. Examples thereof include Li₂S-P₂S₅, Li₂S-P₂S₅-LiCl, Li₂S-P₂S₅-H₂S, Li₂S-P₂S₅-H₂S-LiCl, Li₂S-LiI-P₂S₅, Li₂S-LiI-Li₂O-P₂S₅, Li₂S-LiBr-P₂S₅, Li₂S-Li₂O-P₂S₅, Li₂S-Li₃PO₄-P₂S₅, Li₂S-P₂S₅-P₂O₅, Li₂S-P₂S₅-SiS₂, Li₂S-P₂S₅-SiS₂-LiCl, Li₂S-P₂S₅-SnS, Li₂S-P₂S₅-Al₂S₃, Li₂S-GeS₂, Li₂S-GeS₂-ZnS, Li₂S-Ga₂S₃, Li₂S-GeS₂-Ga₂S₃, Li₂S-GeS₂-P₂S₅, Li₂S-GeS₂-Sb₂S₅, Li₂S-GeS₂-Al₂S₃, Li₂S-SiS₂, Li₂S-Al₂S₃, Li₂S-SiS₂-Al₂S₃, Li₂S-SiS₂-P₂S₅, Li₂S-SiS₂-P₂S₅-LiI, Li₂S-SiS₂-LiI, Li₂S-SiS₂-Li₄SiO₄, Li₂S-SiS₂-Li₃PO₄, Li₁₀GeP₂S₁₂, and the like. Mixing ratios of the respective raw materials do not matter. Examples of a method for synthesizing sulfide-based inorganic solid electrolyte materials using the above-described raw material compositions include an amorphorization method. Examples of the amorphorization method include a mechanical milling method, a solution method, and a melting quenching method. This is because treatments at a normal temperature become possible, and it is possible to simplify manufacturing steps.

### (ii) Oxide-based inorganic solid electrolytes

Oxide-based inorganic solid electrolytes are preferably compounds which contain oxygen atoms (O), have an ion conductivity of metals belonging to Group I or II of the periodic table, and have electron-insulating properties.

Specific examples of the compounds include LiₓₐLa_{ya}TiO₃ [xa=0.3 to 0.7 and ya=0.3 to 0.7] (LLT), Li_{xb}La_{yb}Zr_{zb}M^{bb}_{mb}O_{nb} (M^{bb} is at least one element of Al, Mg, Ca, Sr, V, Nb, Ta, Ti, Ge, In or Sn, xb satisfies 5≤xb≤10, yb satisfies 1≤yb≤4, zb satisfies 1≤zb≤4, mb satisfies 0≤mb≤2, and nb satisfies 5≤nb≤20.), Li_{xc}B_{yc}M^{cc}_{zc}O_{nc} (M^{cc} is at least one element of C, S, Al, Si, Ga, Ge, In, or Sn, xc satisfies 0≤xc≤5, yc satisfies 0≤yc≤1, zc satisfies 0≤zc≤1, and nc satisfies 0≤nc≤6), Li_{xd}(Al, Ga)_{yd}(Ti, Ge)_{zd}Si_{ad}P_{md}O_{nd} (1≤xd≤3, 0≤yd≤1, 0≤zd≤2, 0≤ad≤1, 1≤md≤7, 3≤nd≤13), Li₍₃₋₂ₓₑ₎M^{ee}ₓₑD^{ee}O (xe represents a number of 0 or more and 0.1 or less, and M^{ee} represents a divalent metal atom. D^{ee} represents a halogen atom or a combination of two or more halogen atoms.), Li_{xf}Si_{yf}O_{zf} (1≤xf≤5, 0≤yf≤3, 1≤zf≤10), Li_{xg}S_{yg}O_{zs} (1≤xg≤3, 0<yg≤2, 1≤zg≤10), Li₃BO₃-Li₂SO₄, Li₂O-B₂O₃-P₂O₅, Li₂O-SiO₂, Li₆BaLa₂Ta₂O₁₂, Li₃PO_{(4-3/2w)}N_{w} (w satisfies w<1), Li_{3.5}Zn_{0.25}GeO₄ having a lithium super ionic conductor (LISICON)-type crystal structure, La_{0.55}Li_{0.35}TiO₃ having a perovskite-type crystal structure, LiTi₂P₃O₁₂ having a natrium super ionic conductor (NASICON)-type crystal structure, Li_{1+xh+yh}(Al, Ga)ₓₕ(Ti, Ge)₂₋ₓₕSi_{yh}P_{3-yh}Oᵢ₂ (0≤xh≤1, 0≤yh≤1), Li₇La₃Zr₂O₁₂ (LLZ) having a garnet-type crystal structure. In addition, phosphorus compounds containing Li, P and O are also desirable. Examples thereof include lithium phosphate (Li₃PO₄), LiPON in which some of oxygen atoms in lithium phosphate are substituted with nitrogen, LiPOD¹ (D¹ is at least one element selected from Ti, V, Cr, Mn, Fe, Co, Ni, Cu, Zr, Nb, Mo, Ru, Ag, Ta, W, Pt, Au, or the like), and the like. It is also possible to preferably use LiA¹ON (A¹ represents at least one element selected from Si, B, Ge, Al, C, Ga, or the like) and the like.

The volume-average particle diameter of the inorganic solid electrolyte before being added to the solid electrolyte composition is not particularly limited, but is preferably 0.01 µm or more and more preferably 0.1 µm or more. The upper limit is preferably 100 µm or less and more preferably 50 µm or less. Meanwhile, the average particle diameter of the inorganic solid electrolyte particles is measured in the following order. One percent by mass of a dispersion liquid is diluted and adjusted using the inorganic solid electrolyte particles and water (heptane in a case in which the inorganic solid electrolyte is unstable in water) in a 20 ml sample bottle. The diluted dispersion specimen is irradiated with 1 kHz ultrasonic waves for 10 minutes and is then immediately used for testing. Data capturing is carried out 50 times using this dispersion liquid specimen, a laser diffraction/scattering-type particle size distribution measurement instrument LA-920 (trade name, manufactured by Horiba Ltd.), and a silica cell for measurement at a temperature of 25°C, thereby obtaining the volume-average particle diameter. Regarding other detailed conditions and the like, the description of JIS Z8828:2013 "Particle size analysis-Dynamic light scattering method" is referred to as necessary. Five specimens are produced and measured per level, and the average values thereof are employed.

In a case in which a decrease in the interface resistance and the maintenance of the decreased interface resistance in the case of being used in the all-solid state secondary battery are taken into account, the content of the inorganic solid electrolyte in the solid component of the solid electrolyte composition is preferably 5% by mass or more, more preferably 10% by mass or more, and particularly preferably 20% by mass or more with respect to 100% by mass of the solid components. From the same viewpoint, the upper limit is preferably 99.9% by mass or less, more preferably 99.5% by mass or less, and particularly preferably 99% by mass or less.

These inorganic solid electrolytes may be used singly or two or more inorganic solid electrolytes may be used in combination.

Meanwhile, the solid content (solid component) in the present specification refers to a component that does not volatilize or evaporate and thus disappear in the case of being subjected to a drying treatment in a nitrogen atmosphere at 170°C for six hours. Typically, the solid content refers to a component other than a dispersion medium described below.

### (Binder (B))

The solid electrolyte composition of the embodiment of the present invention contains a binder (B).

The binder (B) that is used in the present invention is an organic polymer and contains a polymer or resin satisfying the following condition 1 or 2. Hereinafter, the polymer or resin satisfying the condition 1 or 2 will be referred to as the polymer (B1) in some cases.
(Condition 1) A Young's modulus is 0.003 GPa or more (preferably 0.01 GPa or more) and less than 0.2 GPa and a breaking elongation is 300% to 700% (preferably 500 to 700%)
(Condition 2) A Young's modulus is 0.2 to 2 GPa and a breaking elongation is 10% to 1,000%

Meanwhile, the content of the polymer (B1) in the total mass of the binder (B) is preferably 80% by mass or more and more preferably 90% by mass or more. The upper limit is not particularly limited, but is preferably 100% by mass or less.

In a case in which Young's modulus and the breaking elongation of the polymer (B1) are in the specific numerical ranges described as the condition 1 or 2, the deformation or breakage of the polymer by external stress is suppressed, and thus a solid electrolyte-containing sheet that is produced using the solid electrolyte composition containing the polymer (B1) is excellent in terms of not only a bonding property but also scratch resistance. As a result, the manufacturing efficiency of all-solid state secondary batteries can be improved.

The polymer (B 1) preferably satisfies the following condition 3 since the deformation or breakage of the polymer by external stress is further suppressed.
(Condition 3) A Young's modulus is 0.2 to 2 GPa (preferably 0.3 to 1 GPa) and a breaking elongation is 300% to 700% (preferably 500 to 700%)

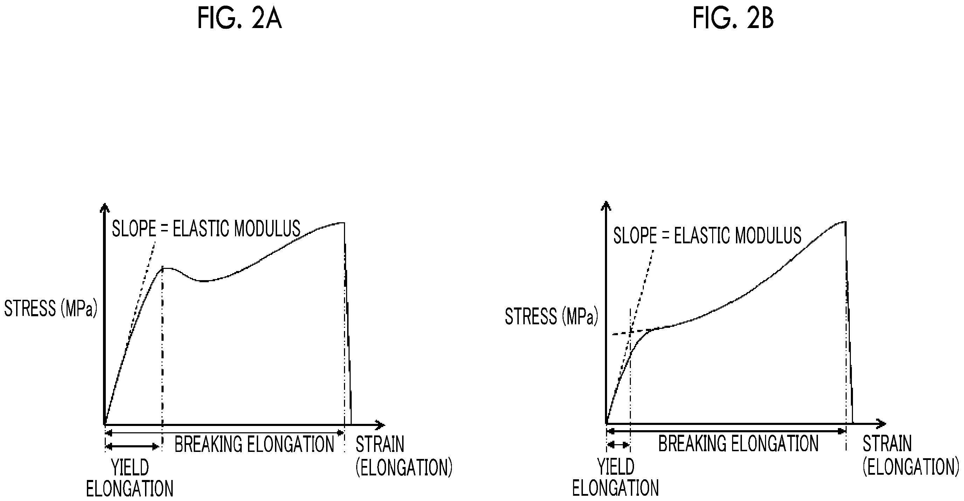

In the description of the present invention, Young's modulus refers to a tensile elastic modulus and can be computed using the slope (of a linear portion) in an elastic region on a stress-strain diagram obtained from a tensile test of a material. Young's modulus is obtained by producing a test specimen described in JIS K 7161 "Plastics-Determination of Tensile Properties" from a binder solution and measuring the tensile elastic modulus and tensile strain at break or nominal tensile strain at break described in the above standard (refer to Figs. 2A and 2B).

Meanwhile, in the present specification, Young's modulus will also be referred to as elastic modulus in some cases.

In the description of the present invention, the breaking elongation is defined as a permanent elongation after the breakage of a test specimen on a stress-strain diagram obtained from a tensile test of a material. The breaking elongation is obtained by producing a test specimen described in JIS K 7161 "Plastics-Determination of Tensile Properties" from a binder solution and measuring the tensile elastic modulus and tensile strain at break or nominal tensile strain at break described in the above standard (refer to Figs. 2A and 2B).

The yield elongation of the polymer (B1) is not particularly limited, but is preferably 0.5% or more, more preferably 5% or more, and still more preferably 10% or more. The upper limit is preferably 100% or less, more preferably 50% or less, and still more preferably 40% or less.

Meanwhile, for example, "a yield elongation being 0.5% or more" means that, in a case in which the length of a test specimen before tension is regarded as 100%, the yield point appears when the length reaches 100.5% or more.

In the description of the present invention, the yield elongation is defined as an elongation up to the yield point on a stress-strain diagram obtained from a tensile test of a material. The yield elongation is obtained by producing a test specimen described in JIS K 7161 "Plastics-Determination of Tensile Properties" from a binder solution and measuring the elongation (%) from the initiation of measurement to the yield point. Meanwhile, a method for reading the yield point on a stress-strain diagram obtained from a tensile test will be described below. In a case in which a stress-strain curve has an ordinary yield point, strain up to the upper yield point is regarded as the yield elongation (Fig. 2A). In a case in which the yield point is not clearly read, the yield point is determined as described below. (1) Points at which a value that is obtained by differentiating a stress-strain curve single time is maximized and minimized are respectively obtained. (2) The intersection point of tangent lines at these two points is regarded as the yield point (Fig. 2B).

The polymer (B1) satisfies the condition 1 or 2 and is selected from the group consisting of polyurethane, polyester, acrylic polymer, polycarbonate, a hydrogenated acrylonitrile butadiene rubber and a polyamide.

As examples of the thermoplastic resin, polymethyl methacryl (PMMA), polyethylene terephthalate (PET), polyamide (PA), polycarbonate (PC), polybutylene terephthalate (PBT), and hydrogenated acrylonitrile-butadiene rubber (HNBR) are exemplified. In the description of the present invention, the copolymer may be any of a statistic copolymer and a periodic copolymer and is preferably a block copolymer.

The binder (B) may have a crosslinking structure made of a covalent bond. The crosslinking structure is represented by General Formula (1) or (2).

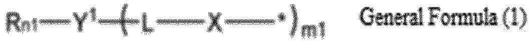

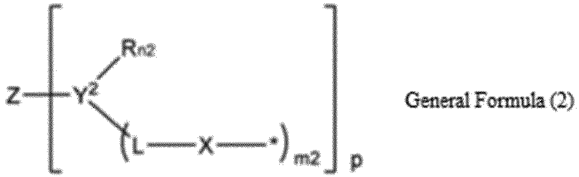

In the formulae, n1 and n2 represent an integer of 0 to 4. m1 represents an integer of 2 to 4. m2 represents an integer of 1 to 4. p represents an integer of 2 to 4. R represents a monovalent substituent. Y¹ represents an n1+m1-valent organic group. L represents a single bond or a divalent linking group. X represents an oxygen atom, a nitrogen atom, a sulfur atom, a carbonyl group, or a divalent functional group including at least one of the above-described atoms or group. Z represents a p-valent linking group. Y² represents a n2+m2+1-valent organic group. * represents a bonding portion.

As the monovalent substituent represented by R, an alkyl group or an aryl group is exemplified. The number of carbon atoms in the alkyl group is preferably 1 to 10, and, as specific examples, methyl, ethyl, propyl, i-propyl, and butyl are exemplified. The number of carbon atoms in the aryl group is preferably 6 to 10, and the aryl group may be substituted with the alkyl group. As specific examples of the aryl group, a phenyl group, a tolyl group, and a mesityl group are exemplified.

Y¹ represents an n1+m1-valent organic group, that is, a di- to octavalent organic group and is preferably a di- to hexavalent organic group and more preferably a di- to tetravalent organic group.

Examples of the divalent organic group include an alkylene group and an arylene group. The number of carbon atoms in the alkyl group is preferably 1 to 20 and more preferably 1 to 10, and examples of such an alkyl group include methylene, ethylene, propylene, butylene, pentylene, hexylene, heptylene, and octylene group. The number of carbon atoms in the arylene group is preferably 6 to 20 and more preferably 6 to 14, and examples of such an arylene group include phenylene and naphthalenediyl. In addition, the divalent organic group may be an oxygen atom (-O-).

Examples of the trivalent organic group include an alkanetriyl group and an aryltriyl group. The number of carbon atoms in the alkanetriyl group is preferably 1 to 20 and more preferably 1 to 10, and examples of such an alkanetriyl group include methanetriyl, ethanetriyl, propanetriyl, and butanetriyl. The number of carbon atoms in the aryltriyl group is preferably 6 to 20 and more preferably 6 to 14, and examples of such an aryltriyl group include benzenetriyl and naphthalenetriyl. In addition, the trivalent organic group may be a nitrogen atom.

Examples of the tetravalent organic group include an alkanetetrayl group and an arenetetrayl group. The number of carbon atoms in the alkanetetrayl group is preferably 1 to 20 and more preferably 1 to 10, and examples of such an alkanetetrayl group include methanetetrayl, ethanetetrayl, propanetetrayl, and butanetetrayl. The number of carbon atoms in the arenetetrayl group is preferably 6 to 20 and more preferably 6 to 14, and examples of such an arenetetrayl group include benzenetetrayl and naphthalenetetrayl.

Examples of the pentavalent organic group include an alkanepentayl group and an arenepentayl group. The number of carbon atoms in the alkanepentayl group is preferably 2 to 20 and more preferably 2 to 10, and examples of such an alkanepentayl group include ethanepentayl, propanepentayl, and butanepentayl. The number of carbon atoms in the arenepentayl group is preferably 6 to 20 and more preferably 6 to 14, and examples of such an arenepentayl group include benzenepentayl and naphthalenepentayl.

Examples of the hexavalent organic group include an alkanehexayl group and an arenehexayl group. The number of carbon atoms in the alkanehexayl group is preferably 2 to 20 and more preferably 2 to 10, and examples of such an alkanehexayl group include ethanehexayl, propanehexayl, and butanehexayl. The number of carbon atoms in the arenehexayl group is preferably 6 to 20 and more preferably 6 to 14, and examples of such an arenehexayl group include benzenehexayl and naphthalenehexayl.

Examples of the heptavalent organic group include an alkaneheptayl group and an areneheptayl group. The number of carbon atoms in the alkaneheptayl group is preferably 3 to 20 and more preferably 3 to 10, and examples of such an alkaneheptayl group include propaneheptayl and butaneheptayl. The number of carbon atoms in the areneheptayl group is preferably 10 to 20 and more preferably 10 to 14, and examples of such an areneheptayl group include naphthaleneheptayl.

Examples of the octavalent organic group include an alkaneoctayl group and an areneoctayl group. The number of carbon atoms in the alkaneoctayl group is preferably 3 to 20 and more preferably 3 to 10, and examples of such an alkaneoctayl group include propaneoctayl and butaneoctayl. The number of carbon atoms in the areneoctayl group is preferably 10 to 20 and more preferably 10 to 14, and examples of such an areneoctayl group include naphthaleneoctayl.

As the divalent linking group represented by L, it is possible to employ the divalent organic group represented by Y¹. In addition, the divalent linking group represented by L is also preferably a group obtained by removing two constituent atoms (for example, hydrogen atoms) from a polymer belonging to the following group of polymers (A). Specific examples thereof include divalent groups obtained by removing two hydrogen atoms from a polyester and divalent groups obtained by removing two hydrogen atoms from a polyethylene glycol.

### <Group of polymers (A)>

Polyethylene glycol, polypropylene glycol, polytetramethylene glycol, polyester, polycarbonate, and polysiloxane.

The functional group including a carbonyl group that is represented by X preferably has an ester group, a thioester group, a urethane group, a urea group, an amide group, or an imide group.

As the p-valent linking group represented by Z, that is, the di- to tetravalent linking group, it is possible to employ the di- to tetravalent organic group represented by Y¹.

Y² represents a n2+m2+1-valent organic group, that is, a tri- to nonavalent organic group and is preferably trivalent to hexavalent and more preferably trivalent or tetravalent.

As a tri- to octavalent linking group represented by Y², it is possible to employ the tri-to octavalent organic groups represented by Y¹.

As the nonavalent linking group represented by Y², for example, an alkanenonayl group and an arenenonayl group. The number of carbon atoms in the alkanenonayl group is preferably 4 to 20 and more preferably 4 to 10, and examples of such an alkanenonayl group include butanenonayl. The number of carbon atoms in the arenenonayl group is preferably 14 to 20 and more preferably 10 to 14, and examples of such an arenenonayl group include pyrenenonayl.

The crosslinking structure of the binder (B) may have a trifunctional modified isocyanate structure. As the trifunctional modified isocyanate structure, a biuret type, an isocyanurate type, and a block type are also preferably used. Specifically, Y¹ and Y² preferably have a trifunctional modified isocyanate structure.

The crosslinking structure of the binder (B) may include an organic polymer bonding to the main chain of the binder (B) through three or more ether groups. Specifically, polyvinyl alcohol and modified polyrotaxane-graft-polycaprolactone are preferably used.

In the present specification, the "main chain" refers to a linear molecular chain in which, among all of the molecular chains in a polymer, all of the molecular chains (long molecular chains and/or short molecular chains) except for the main chain can be considered as pendants relative to the main chain. Typically, among the molecular chains constituting a polymer, the longest chain is the main chain. Here, a functional group that a terminal of a polymer has is not considered as the main chain and is separately regulated as a terminal functional group.

The polymer (B 1) that is used in the present invention preferably has a functional group capable of forming a crosslinking structure by a radical polymerization reaction, a cationic polymerization reaction, or an anionic polymerization reaction (hereinafter, also referred to as crosslinking functional group). In a case in which the crosslinking functional groups react with each other to form a bond, the polymer (B1) that is used in the present invention is capable of generating a crosslinked structure in polymer particles or between polymer particles and improving strength. Meanwhile, the crosslinking structure that can be formed by the crosslinking functional group is different from the crosslinking structure that the binder (B) has which is represented by Formula (1) or (2).

As the crosslinking functional group, a group having a carbon-carbon unsaturated bond and/or a cyclic ether group is preferred, and a functional group belonging to the following group of functional groups (I) is more preferably included.

### <Group of functional groups (I)>

A group having a carbon-carbon unsaturated bond, an epoxy group, and an oxetanyl group.

The group having a carbon-carbon unsaturated bond is capable of forming a crosslinking structure by a radical polymerization reaction, and, specifically, an alkenyl group (preferably having 2 to 12 carbon atoms and more preferably 2 to 8 carbon atoms), an alkynyl group (preferably 2 to 12 carbon atoms and more preferably 2 to 8 carbon atoms), an acryloyl group, and a methacryloyl group are preferably exemplified, and a vinyl group, an ethynyl group, an acryloyl group, a methacryloyl group, and 2-trifluoromethylpropenoyl group are more preferably exemplified. The cyclic ether group is capable of forming a crosslinking structure by a cationic polymerization reaction, and, specifically, an epoxy group and an oxetanyl group are preferably exemplified.

Regarding a reaction between the crosslinking functional groups that is used as the radical polymerization reaction, the cationic polymerization reaction, or the anionic polymerization reaction, the crosslinking functional groups may be reacted with each other using a polymerization initiator corresponding to each crosslinking functional group (radical, cationic, or anionic polymerization initiator) that has been added to the solid electrolyte composition of the embodiment of the present invention or the crosslinking functional groups may be reacted with each other by a redox reaction during the driving of a battery. Meanwhile, the radical polymerization initiator may be any of a thermoradical polymerization initiator that is cleaved by heat and generates an initiation radical or a photoradical polymerization initiator that generates an initiation radical by light, electron beams, or radiation.

As the polymerization initiator that the solid electrolyte composition of the embodiment of the present invention may contain, a polymerization initiator that is ordinarily used can be used without any particular limitation.

The amount of the crosslinking structure introduced is not particularly limited, but it is preferable that the lower limit is 5% by mass or more and the upper limit is preferably 50% by mass or less of the total mass of the polymer (B1).

The polymer (B1) that is used in the present invention preferably has a functional group for enhancing the wettability and/or the adsorption property to solid particle surfaces. As the functional group, a functional group exhibiting an interaction such as a hydrogen bond on solid particle surfaces and a functional group capable of forming a chemical bond with a group on a solid particle surface are exemplified, and, specifically, the polymer preferably has at least one functional group belonging to the following group of functional groups (II).

### <Group of functional groups (II)>

A carboxy group, a sulfonic acid group (-SO₃H), a phosphate group (-PO₄H₂), an amino group (-NH₂), a hydroxy group, a sulfanyl group, an isocyanate group, and a group having a ring-fused structure of three or more rings.

Meanwhile, the sulfonic acid group and the phosphate group may have a form of a salt thereof, and examples thereof include a sodium salt and a calcium salt.

The group having a ring-fused structure of three or more rings is preferably a group having a cholesterol ring structure or a group having a structure in which a group of three or more aromatic rings is fused together and more preferably a cholesterol residue or a pyrenyl group.

The content of the functional group belonging to the group of functional groups (II) in the polymer (B1) that is used in the present invention is not particularly limited, but the proportion of a repeating unit having the functional group belonging to the group of functional groups (II) in all of the repeating units constituting the polymer (B 1) that is used in the present invention is preferably 1 to 50 mol% and more preferably 5 to 20 mol%.

The weight-average molecular weight of the polymer (B 1) is preferably 5,000 or more and less than 5,000,000, more preferably 5,000 or more and less than 500,000, and still more preferably 5,000 or more and less than 100,000.

Regarding the glass transition temperature of the polymer (B1), the upper limit is preferably 80°C or lower, more preferably 50°C or lower, and still more preferably 30°C or lower. The lower limit is not particularly limited; however, generally, -80°C or higher.

The polymer (B1) that is used in the present invention preferably has the following characteristics in order to satisfy the condition 1 or 2.

The polymer (B1) preferably has a structure described below in order to improve the elastic modulus of the polymer (B1). The polymer (B1) preferably has a polymer portion exhibiting a hard segment and a soft segment. This is to form a microphase-separated structure in which hard segments and soft segments gather together.

Here, the hard segment refers to a segment having an aromatic group or a heteroaromatic group, a rigid group such as an aliphatic alicyclic group, or a bond portion enabling intermolecular packing by an intermolecular hydrogen bond or a π-π interaction (a urethane bond, a urea bond, an amide bond, an imide bond, or the like).

In addition, the polymer (B1) preferably has a hydrogen bond-forming functional group. This is because, in a case in which the binder (B1) forms a hydrogen bond in a molecule or between molecules, the agglomerating property of the polymer (B1) is enhanced. As the hydrogen bond-forming functional group, a carbonyl group, an imino group, a sulfo group, a carboxy group, a hydroxy group, an amino group, and the like are exemplified.

The polymer (B1) may have a benzene ring. This is because aromatic rings that are included in the polymer (B1) exhibit a stacked structure due to an interaction between molecules or in the molecule and thus the agglomerating property of the polymer (B1) improves. The stacked structure may be a structure in which a plurality of benzene rings is fused together, and examples thereof include a naphthalene skeleton, an anthracene skeleton, a chrysene skeleton, and a pyrene skeleton.

The polymer (B1) preferably has a crosslinking structure. This is because polymers are linked to each other three-dimensionally between molecules by the formation of cross-links and the agglomerating force increases.

The polymer (B1) preferably has a soft segment which is a highly flexible repeating structure in order to improve the breaking elongation. This is because, in a case in which external stress is applied, a binder chain expands, and thus breakage is suppressed. As examples of the soft segment, a polyisoprene structure, a polybutadiene structure, a polyalkylene glycol structure, a polysiloxane structure, and the like can be exemplified. In addition, in a case in which the polymer (B1) has the hard segment and the soft segment, the breaking elongation can be improved by increasing the proportion of the soft segment in the total mass of the polymer.

In addition, the polymer (B1) preferably has the following characteristics in order to set the yield elongation to 10% or more.

The polymer (B 1) preferably has a polymer portion exhibiting the hard segment and the soft segment. This is to form a microphase-separated structure in which hard segments and soft segments gather together. In addition, the polymer preferably has a carbonate structure in a soft segment portion in order to improve the agglomerating property between the soft segments.

The shape of the polymer (B1) that is used in the present invention is not particularly limited and may be a particle shape or an irregular shape in the solid electrolyte composition, the solid electrolyte-containing sheet, or the all-solid state secondary battery.

In the present invention, the polymer (B1) is preferably particles that are insoluble in the dispersion medium from the viewpoint of the dispersion stability of the solid electrolyte composition and the viewpoint of obtaining an all-solid state secondary battery having a high ion conductivity. Here, "the polymer (B1) is particles that are insoluble in the dispersion medium" means that, even in a case in which the binder is added to the dispersion medium at 30°C and left to stand for 24 hours, the average particle diameter does not decrease by 5% or more, and the average particle diameter preferably does not decrease by 3% or more, and the average particle diameter more preferably does not decrease by 1% or more.

In addition, in order to suppress a decrease in the interparticle ion conductivity of the inorganic solid electrolyte or the like, the polymer (B1) in the solid electrolyte composition preferably has a particle shape, and the average particle diameter is preferably 10 nm to 1,000 nm and more preferably 100 nm to 500 nm.

Unless particularly otherwise described, the average particle diameter of the polymer (B1) particles that are used in the present invention can be measured under measurement conditions described below.

One percent by mass of a dispersion liquid is prepared by diluting the polymer (B1) particles using a random solvent (a dispersion medium that is used to prepare the solid electrolyte composition, for example, octane) in a 20 ml sample bottle. The diluted dispersion specimen is irradiated with 1 kHz ultrasonic waves for 10 minutes and then immediately used for testing. Data capturing is carried out 50 times using this dispersion liquid specimen, a laser diffraction/scattering-type particle size distribution measurement instrument LA-920 (trade name, manufactured by Horiba Ltd.), and a silica cell for measurement at a temperature of 25°C, and the obtained volume-average particle diameter is used as the average particle diameter. Regarding other detailed conditions and the like, the description of JIS Z8828:2013 "Particle size analysis-Dynamic light scattering method" is referred to as necessary. Five specimens are produced and measured per level, and the average values thereof are employed.

Meanwhile, the average particle diameter can be measured from the produced all-solid state secondary battery by, for example, disassembling the battery, peeling the electrodes off, then, measuring the average particle diameters of the electrode materials according to the above-described method for measuring the average particle diameter of the polymer (B1) particles, and excluding the measurement value of the average particle diameter of particles other than the polymer (B1) particles which has been measured in advance.

In a case in which the binder (B) includes a polymer and/or a resin other than the polymer (B1), that is, a polymer and/or a resin that does not satisfy the condition 1 or 2, as such a polymer, polymers and resins that are generally used as a binder for all-solid state secondary batteries are exemplified.

Hereinafter, a polymer and/or a resin other than the polymer (B1) that may be included in the binder (B) will be described. The polymer and/or the resin other than the polymer (B1) will be referred to as polymer (b).

As fluorine-containing resins, for example, polytetrafluoroethylene (PTFE), polyvinylidene difluoride (PVdF), and copolymers of polyvinylidene difluoride and hexafluoropropylene (PVdF-HFP) are exemplified.

As hydrocarbon-based thermoplastic resins, for example, polyethylene, polypropylene, styrene butadiene rubber (SBR), hydrogenated styrene butadiene rubber (HSBR), butylene rubber, acrylonitrile butadiene rubber, polybutadiene, and polyisoprene are exemplified.

As acrylic resins, a variety of (meth)acrylic monomers, (meth)acrylic amide monomers, and copolymers of monomers constituting these resins (preferably copolymers of acrylic acid and methyl acrylate) are exemplified.

In addition, copolymers with other vinyl-based monomers are also preferably used. For example, a copolymer of methyl (meth)acrylate and styrene, a copolymer of methyl (meth)acrylate and acrylonitrile, and a copolymer of butyl (meth)acrylate, acrylonitrile, and styrene are exemplified. In the present specification, the copolymer may be any of a statistic copolymer or a periodic copolymer and is preferably block copolymer.

As other resins, for example, a polyurethane resin, a polyurea resin, a polyamide resin, a polyimide resin, a polyester resin, a polyether resin, a polycarbonate resin, a cellulose derivative resin, and the like are exemplified.

These binders may be used singly or two or more binders may be used in combination.

To the shape of the polymer (b) and the average particle diameter of particles, it is possible to preferably apply the form of the polymer (B) that is used in the present invention.

However, the average particle diameter of the binder is, generally, preferably 10 nm to 30 µm and more preferably 10 to 1,000 nm nanoparticles.

The concentration of moisture in the polymer (b) is identical to that of the polymer (B) that is used in the present invention.

The weight-average molecular weight (Mw) of the polymer (b) is preferably 10,000 or more, more preferably 20,000 or more, and still more preferably 30,000 or more. The upper limit is preferably 1,000,000 or less, more preferably 200,000 or less, and still more preferably 100,000 or less.

Meanwhile, as the binder (B) and the polymer (b), it is possible to use commercially available products. In addition, the binder and the polymer can also be prepared using an ordinary method.

In addition, the binder (B) that is used in the present invention may be used in a solid state or may be used in a state of a polymer particle dispersion liquid or a polymer solution.

In a case in which a favorable decreasing property of the interface resistance and the maintaining property thereof in the case of being used in the all-solid state secondary battery are taken into account, the content of the binder (B) that is used in the present invention in the solid electrolyte composition is preferably 0.01% by mass or more, more preferably 0.1% by mass or more, and still more preferably 1% by mass or more with respect to 100% by mass of the solid components. From the viewpoint of battery characteristics, the upper limit is preferably 10% by mass or less, more preferably 5% by mass or less, and still more preferably 3% by mass or less.

In the present invention, the mass ratio of the total mass (total amount) of the inorganic solid electrolyte and the active material to the mass of the binder (B) [(the mass of the inorganic solid electrolyte and the mass of the active material)/the mass of the binder (B)] is preferably in a range of 1,000 to 1. Furthermore, this ratio is more preferably 500 to 2 and still more preferably 100 to 10.

### (Active material (C))

The solid electrolyte composition of the embodiment of the present invention may contain an active material capable of intercalating and deintercalating ions of a metal element belonging to Group I or II of the periodic table.

As the active material, a positive electrode active material and a negative electrode active material are exemplified, and a transition metal oxide that is a positive electrode active material or a metal oxide that is a negative electrode active material is preferred.

In the present invention, the solid electrolyte composition containing the active material (the positive electrode active material or the negative electrode active material) will be referred to as a composition for an electrode (a composition for a positive electrode or a composition for a negative electrode).

### - Positive electrode active material -

A positive electrode active material that the solid electrolyte composition of the embodiment of the present invention may contain is preferably a positive electrode active material capable of reversibly intercalating and deintercalating lithium ions. The material is not particularly limited as long as the material has the above-described characteristics and may be a transition metal oxide, an organic substance, an element capable of being complexed with Li such as sulfur, a complex of sulfur and metal, or the like.

Among these, as the positive electrode active material, transition metal oxides are preferably used, and transition metal oxides having a transition metal element M^{a} (one or more elements selected from Co, Ni, Fe, Mn, Cu, and V) are more preferred. In addition, an element M^{b} (metal other than lithium, an element of Group I (Ia) of the periodic table, an element of Group II (IIa), or an element such as Al, Ga, In, Ge, Sn, Pb, Sb, Bi, Si, P, or B) may be mixed into this transition metal oxide. The amount of the element mixed is preferably 0 to 30 mol% of the amount (100 mol%) of the transition metal element M^{a}. The positive electrode active material is more preferably synthesized by mixing the element into the transition metal oxide so that the molar ratio of Li/M^{a} reaches 0.3 to 2.2.

Specific examples of the transition metal oxides include transition metal oxides having a bedded salt-type structure (MA), transition metal oxides having a spinel-type structure (MB), lithium-containing transition metal phosphoric acid compounds (MC), lithium-containing transition metal halogenated phosphoric acid compounds (MD), lithium-containing transition metal silicate compounds (ME), and the like.

Specific examples of the transition metal oxides having a bedded salt-type structure (MA) include LiCoO₂ (lithium cobalt oxide [LCO]), LiNi₂O₂ (lithium nickelate) LiNi_{0.85}Co_{0.10}Al_{0.05}O₂ (lithium nickel cobalt aluminum oxide [NCA]), LiNi_{1/3}Co_{1/3}Mn_{1/3}O₂ (lithium nickel manganese cobalt oxide [NMC]), and LiNi_{0.5}Mn_{0.5}O₂ (lithium manganese nickelate).

Specific examples of the transition metal oxides having a spinel-type structure (MB) include LiMn₂O₄ (LMO), LiCoMnO₄, Li₂FeMn₃O₈, Li₂CuMn₃O₈, Li₂CrMn₃O₈, and Li₂NiMn₃O₈.

Examples of the lithium-containing transition metal phosphoric acid compounds (MC) include olivine-type iron phosphate salts such as LiFePO₄ and Li₃Fe₂(PO₄)₃, iron pyrophosphates such as LiFeP₂O₇, and cobalt phosphates such as LiCoPO₄, and monoclinic nasicon-type vanadium phosphate salt such as Li₃V₂(PO₄)₃ (lithium vanadium phosphate).

Examples of the lithium-containing transition metal halogenated phosphoric acid compounds (MD) include iron fluorophosphates such as Li₂FePO₄F, manganese fluorophosphates such as Li₂MnPO₄F, and cobalt fluorophosphates such as Li₂CoPO₄F.

Examples of the lithium-containing transition metal silicate compounds (ME) include Li₂FeSiO₄, Li₂MnSiO₄, Li₂CoSiO₄, and the like.

In the present invention, the transition metal oxides having a bedded salt-type structure (MA) are preferred, and LCO, LMO, NCA, or NMC is more preferred.

The shape of the positive electrode active material is not particularly limited, but is preferably a particle shape. The volume-average particle diameter (circle-equivalent average particle diameter) of positive electrode active material particles is not particularly limited. For example, the volume-average particle diameter can be set to 0.1 to 50 µm. In order to provide a predetermined particle diameter to the positive electrode active material, an ordinary crusher or classifier may be used. Positive electrode active materials obtained using a firing method may be used after being washed with water, an acidic aqueous solution, an alkaline aqueous solution, or an organic solvent. The volume-average particle diameter (circle-equivalent average particle diameter) of positive electrode active material particles can be measured using a laser diffraction/scattering-type particle size distribution measurement instrument LA-920 (trade name, manufactured by Horiba Ltd.).

The positive electrode active material may be used singly or two or more positive electrode active materials may be used in combination.

In the case of forming a positive electrode active material layer, the mass (mg) of the positive electrode active material per unit area (cm²) of the positive electrode active material layer (weight per unit area) is not particularly limited and can be appropriately determined depending on the set battery capacity.

The content of the positive electrode active material in the solid electrolyte composition is not particularly limited, but is preferably 10% to 95% by mass, more preferably 30% to 90% by mass, still more preferably 50% to 85% by mass, and particularly preferably 55% to 80% by mass with respect to a solid content of 100% by mass.

### - Negative electrode active material -

A negative electrode active material that the solid electrolyte composition of the embodiment of the invention may contain is preferably a negative electrode active material capable of reversibly intercalating and deintercalating lithium ions. The above-described material is not particularly limited as long as the material has the above-described characteristics, and examples thereof include carbonaceous materials, metal oxides such as tin oxide, silicon oxide, metal complex oxides, a lithium single body, lithium alloys such as lithium aluminum alloys, metals capable of forming alloys with lithium such as Sn, Si, Al, and In and the like. Among these, carbonaceous materials or lithium complex oxides are preferably used in terms of reliability. In addition, the metal complex oxides are preferably capable of absorbing and deintercalating lithium. The materials are not particularly limited, but preferably contain titanium and/or lithium as constituent components from the viewpoint of high-current density charging and discharging characteristics.

The carbonaceous material that is used as the negative electrode active material is a material substantially consisting of carbon. Examples thereof include petroleum pitch, carbon black such as acetylene black (AB), graphite (natural graphite, artificial graphite such as highly oriented pyrolytic graphite), and carbonaceous material obtained by firing a variety of synthetic resins such as polyacrylonitrile (PAN)-based resins or furfuryl alcohol resins. Furthermore, examples thereof also include a variety of carbon fibers such as PAN-based carbon fibers, cellulose-based carbon fibers, pitch-based carbon fibers, vapor-grown carbon fibers, dehydrated polyvinyl alcohol (PVA)-based carbon fibers, lignin carbon fibers, glassy carbon fibers, and active carbon fibers, mesophase microspheres, graphite whisker, flat graphite, and the like.

The metal oxides and the metal complex oxides being applied as the negative electrode active material are particularly preferably amorphous oxides, and furthermore, chalcogenides which are reaction products between a metal element and an element belonging to Group XVI of the periodic table are also preferably used. The amorphous oxides mentioned herein refer to oxides having a broad scattering band having a peak of a 20 value in a range of 20° to 40° in an X-ray diffraction method in which CuKα rays are used and may have crystalline diffraction lines.

In a compound group consisting of the amorphous oxides and the chalcogenides, amorphous oxides of semimetal elements and chalcogenides are more preferred, and elements belonging to Groups XIII (IIIB) to XV (VB) of the periodic table, oxides consisting of one element or a combination of two or more elements of Al, Ga, Si, Sn, Ge, Pb, Sb, and Bi, and chalcogenides are particularly preferred. Specific examples of preferred amorphous oxides and chalcogenides include Ga₂O₃, SiO, GeO, SnO, SnO₂, PbO, PbO₂, Pb₂O₃, Pb₂O₄, Pb₃O₄, Sb₂O₃, Sb₂O₄, Sb₂O₈Bi₂O₃, Sb₂O₈Si₂O₃, Bi₂O₄, SnSiO₃, GcS, SnS, SnS₂, PbS, PbS₂, Sb₂S₃, Sb₂S₅, and SnSiS₃. In addition, these amorphous oxides may be complex oxides with lithium oxide, for example, Li₂SnO₂.

The negative electrode active material preferably contains a titanium atom. More specifically, Li₄Ti₅O₁₂ (lithium titanium oxide [LTO]) is preferred since the volume fluctuation during the absorption and deintercalation of lithium ions is small, and thus the high-speed charging and discharging characteristics are excellent, and the deterioration of electrodes is suppressed, whereby it becomes possible to improve the service lives of lithium ion secondary batteries.

In the present invention, a Si-based negative electrode is also preferably applied. Generally, a Si negative electrode is capable of absorbing a larger number of Li ions than a carbon negative electrode (graphite, acetylene black, or the like). That is, the amount of Li ions absorbed per unit mass increases. Therefore, it is possible to increase the battery capacity. As a result, there is an advantage that the battery driving duration can be extended.

The shape of the negative electrode active material is not particularly limited, but is preferably a particle shape. The average particle diameter of the negative electrode active material is preferably 0.1 to 60 µm. In order to provide a predetermined particle diameter, an ordinary crusher or classifier is used. For example, a mortar, a ball mill, a sand mill, an oscillatory ball mill, a satellite ball mill, a planetary ball mill, a swirling airflow-type jet mill, a sieve, or the like is preferably used. During crushing, it is also possible to carry out wet-type crushing in which water or an organic solvent such as methanol is made to coexist as necessary. In order to provide a desired particle diameter, classification is preferably carried out. The classification method is not particularly limited, and it is possible to use a sieve, a wind power classifier, or the like depending on the necessity. Both of dry-type classification and wet-type classification can be carried out. The average particle diameter of negative electrode active material particles can be measured using the same method as the method for measuring the volume-average particle diameter of the positive electrode active material.

The chemical formulae of the compounds obtained using a firing method can be computed using an inductively coupled plasma (ICP) emission spectroscopic analysis method as a measurement method from the mass difference of powder before and after firing as a convenient method.

The negative electrode active material may be used singly or two or more negative electrode active materials may be used in combination.

In the case of forming a negative electrode active material layer, the mass (mg) of the negative electrode active material per unit area (cm²) in the negative electrode active material layer (weight per unit area) is not particularly limited and can be appropriately determined depending on the set battery capacity.

The content of the negative electrode active material in the solid electrolyte composition is not particularly limited, but is preferably 10% to 80% by mass and more preferably 20% to 80% by mass with respect to a solid content of 100% by mass.

The surfaces of the positive electrode active material and the negative electrode active material may be coated with a separate metal oxide. As a surface coating agent, metal oxides and the like containing Ti, Nb, Ta, W, Zr, Al, Si, or Li are exemplified. Specifically, titanium oxide spinel, tantalum-based oxides, niobium-based oxides, lithium niobate-based compounds, and the like are exemplified, and specific examples thereof include Li₄Ti₅O₁₂, Li₂Ti₂O₅, LiTaO₃, LiNbO₃, LiAlO₂, Li₂ZrO₃, Li₂WO₄, Li₂TiO₃, Li₂B₄O₂, Li₃PO₄, Li₂MoO₄, Li₃BO₃, LiBO₂, Li₂CO₃, Li₂SiO₃, SiO₂, TiO₂, ZrO₂, Al₂O₃, B₂O₃, and the like.

In addition, a surface treatment may be carried out on the surfaces of electrodes including the positive electrode active material or the negative electrode active material using sulfur or phosphorus.

Furthermore, the particle surfaces of the positive electrode active material or the negative electrode active material may be treated with an active light ray or an active gas (plasma or the like) before or after the coating of the surfaces.

### (Dispersion medium (D))

The solid electrolyte composition of the embodiment of the present invention preferably contains a dispersion medium for dispersing solid components. Specific examples of the dispersion medium include dispersion media described below.

Examples of an alcohol compound solvent include methyl alcohol, ethyl alcohol, 1-propyl alcohol, 2-butanol, ethylene glycol, propylene glycol, glycerin, 1,6-hexanediol, 1,3-butanediol, and 1,4-butanediol.

As an ether compound solvent, alkylene glycol alkyl ethers (ethylene glycol monomethyl ether, ethylene glycol monobutyl ether, diethylene glycol, dipropylene glycol, propylene glycol monomethyl ether, diethylene glycol monomethyl ether, triethylene glycol, polyethylene glycol, propylene glycol dimethyl ether, dipropylene glycol monomethyl ether, tripropylene glycol monomethyl ether, diethylene glycol monobutyl ether, diethylene glycol dibutyl ether, and the like), dialkyl ethers (dimethyl ether, diethyl ether, dibutyl ether, and the like), tetrahydrofuran, and dioxane (including each of 1,2-, 1,3-, and 1,4- isomers).

Examples of an amide compound solvent include N,N-dimethylformamide, 1-methyl-2-pyrrolidone, 2-pyrrolidinone, 1,3-dimethyl-2-imidazolidinone, 2-pyrrolidinone, ε-caprolactam, formamide, N-methylformamide, acetamide, N-methylacetamide, N,N-dimethylacetamide, N-methylpropanamide, and hexamethylphosphoric triamide.

Examples of an amino compound solvent include triethylamine and tributylamine.

Examples of a ketone compound solvent include acetone, methyl ethyl ketone, diethyl ketone, dipropyl ketone, and dibutyl ketone.

As an ester-based compound solvent, methyl acetate, ethyl acetate, propyl acetate, butyl acetate, pentyl acetate, hexyl acetate, methyl propionate, ethyl propionate, propyl propionate, butyl propionate, methyl butyrate, ethyl butyrate, propyl butyrate, butyl butyrate, pentyl butyrate, methyl valerate, ethyl valerate, propyl valerate, butyl valerate, methyl caproate, ethyl caproate, propyl caproate, butyl caproate, and the like are exemplified.

Examples of an aromatic compound solvent include benzene, toluene, xylene, and mesitylene.

Examples of an aliphatic compound solvent include hexane, heptane, cyclohexane, methylcyclohexane, octane, pentane, cyclopentane, and cyclooctane.

Examples of a nitrile compound solvent include acetonitrile, propionitrile, and butyronitrile.

The boiling point of the dispersion medium at a normal pressure (1 atmosphere) is preferably 50°C or higher and more preferably 70°C or higher. The upper limit is preferably 250°C or lower and more preferably 220°C or lower. The dispersion medium may be used singly or two or more dispersion media may be used in combination.

The dispersion medium (D) that is used in the present invention is preferably an ether compound solvent or a hydrocarbon solvent (an aromatic compound solvent or an aliphatic compound solvent) and more preferably a hydrocarbon solvent since the solid electrolyte composition of the embodiment of the present invention is capable of containing the particle-shaped binder (B).

The content of the hydrocarbon solvent in the dispersion medium (D) is preferably 50% by mass or more, more preferably 70% by mass or more, and still more preferably 90% by mass or more since the solid electrolyte composition of the embodiment of the present invention is capable of containing the particle-shaped binder (B). The upper limit value is not particularly limited, but is preferably 100% by mass.

Among them, the aromatic compound solvent is preferably toluene or xylene, and the aliphatic compound solvent is preferably heptane, octane, cyclohexane, or cyclooctane.

Meanwhile, in a case in which the binder (B) that is used in the present invention has the functional group selected from the group of functional groups (II) capable of bonding to the crosslinking functional group and/or solid particles, the binder (B) may form a crosslinking structure and/or may form a bond between the solid particles.

Meanwhile, the content of the dispersion medium in the solid electrolyte composition of the embodiment of the present invention is not particularly limited, but is preferably 20% to 80% by mass, more preferably 30% to 70% by mass, and particularly preferably 40% to 60% by mass.

### (Conductive auxiliary agent (E))

The solid electrolyte composition of the embodiment of the present invention may also contain a conductive auxiliary agent. The conductive auxiliary agent is not particularly limited, and conductive auxiliary agents that are known as ordinary conductive auxiliary agents can be used. The conductive auxiliary agent may be, for example, graphite such as natural graphite or artificial graphite, carbon black such as acetylene black, Ketjen black, or furnace black, irregular carbon such as needle cokes, a carbon fiber such as a vapor-grown carbon fiber or a carbon nanotube, or a carbonaceous material such as graphene or fullerene which are electron-conductive materials and also may be metal powder or a metal fiber of copper, nickel, or the like, and a conductive polymer such as polyaniline, polypyrrole, polythiophene, polyacetylene, or a polyphenylene derivative may also be used. In addition, these conductive auxiliary agents may be used singly or two or more conductive auxiliary agents may be used.

In the present invention, in the case of jointly using the negative electrode active material and the conductive auxiliary agent, a conductive auxiliary agent that does not intercalate and deintercalate Li and does not function as a negative electrode active material at the time of charging and discharging a battery is regarded as the conductive auxiliary agent. Therefore, in the conductive auxiliary agent, a conductive auxiliary agent capable of functioning as the negative electrode active material in the negative electrode active material layer at the time of charging and discharging a battery is classified not into the conductive auxiliary agent but into the negative electrode active material. Whether or not the conductive auxiliary agent functions as the negative electrode active material at the time of charging and discharging a battery is not unambiguous but is determined by the combination with the negative electrode active material.

The content of the conductive auxiliary agent is preferably 0% to 5% by mass and more preferably 0.5% to 3% by mass or more with respect to 100% by mass of the solid contents in the solid electrolyte composition.

### (Dispersant (F))

The solid electrolyte composition of the embodiment of the present invention may also contain a dispersant. The addition of the dispersant enables the suppression of the agglomeration of the electrode active material and the inorganic solid electrolyte and the formation of an active material layer and a solid electrolyte layer in which the distances between components are uniform even in a case in which the content of any of the electrode active material and the inorganic solid electrolyte is high or a case in which the average particle diameters of the electrode active material and/or the inorganic solid electrolyte are small and the surface area increases. As the dispersant, a dispersant that is ordinarily used for all-solid state secondary batteries can be appropriately selected and used. Generally, a compound intended for particle adsorption and steric repulsion and/or electrostatic repulsion is preferably used.

### (Lithium salt (G))

The solid electrolyte composition of the embodiment of the invention may also contain a lithium salt.

The lithium salt is not particularly limited, and, for example, the lithium salt described in Paragraphs 0082 to 0085 of JP2015-088486A is preferred.

The content of the lithium salt is preferably 0 parts by mass or more and more preferably 5 parts by mass or more with respect to 100 parts by mass of the sulfide-based inorganic solid electrolyte. The upper limit is preferably 50 parts by mass or less and more preferably 20 parts by mass or less.

### (Preparation of solid electrolyte composition)

As an example of a method for preparing the solid electrolyte composition of the embodiment of the present invention, a method in which the inorganic solid electrolyte (A) and the binder (B) are dispersed in the presence of the dispersion medium (D) to produce a slurry.

The slurry can be produced by mixing the inorganic solid electrolyte, the binder, and the dispersion medium using a variety of mixers. The mixing device is not particularly limited, and examples thereof include a ball mill, a beads mill, a planetary mixer, a blade mixer, a roll mill, a kneader, and a disc mill. The mixing conditions are not particularly limited; however, in the case of using a ball mill, the inorganic solid electrolyte and the dispersion medium are preferably mixed together at 150 to 700 rpm (rotation per minute) for one hour to 24 hours.

In the case of preparing a solid electrolyte composition containing components such as an active material and a dispersant, the components may be added to and mixed with at the same time as the dispersion step of the inorganic solid electrolyte (A) or may be separately added to and mixed with. Meanwhile, the binder (B) may also be separately added to and mixed with the dispersion step of the inorganic solid electrolyte (A). In addition, in order to prepare the solid electrolyte composition of the embodiment of the present invention, the form of the binder (B) at the time of being added to and mixed with may be the original form of the binder (B) or may be a form of the solution of the binder (B) or the dispersion liquid of the binder (B). Among these, the dispersion liquid of the particulate binder (B) is preferred since the decomposition of the inorganic solid electrolyte is suppressed, and the ion conductivity can be guaranteed by scattering the polymer on the particle surfaces of the active material and the inorganic solid electrolyte.

### [Solid electrolyte-containing sheet]

The solid electrolyte-containing sheet of the embodiment of the present invention includes an inorganic solid electrolyte (A) having a conductivity of an ion of a metal belonging to Group I or II of the periodic table and a binder (B), and the binder (B) includes a polymer satisfying the following condition (1) or (2).
(Condition 1) A Young's modulus is 0.003 GPa or more and less than 0.2 GPa and a breaking elongation is 300% to 700%
(Condition 2) A Young's modulus is 0.2 to 2 GPa and a breaking elongation is 10% to 1,000%

As the inorganic solid electrolyte (A) and the binder (B), it is possible to employ the inorganic solid electrolyte (A) and the binder (B) described above.

The solid electrolyte-containing sheet of the embodiment of the present invention preferably includes an active material (C).

As the active material (C), it is possible to employ the active material (C) described above.

The solid electrolyte-containing sheet of the embodiment of the present invention contains the binder (B) satisfying the condition 1 or 2 and is thus excellent in terms of a bonding property between solid particles and scratch resistance. The reason therefor is considered as described below. That is, the binder (B) has a high Young's modulus and is thus capable of suppressing the deformation of the solid electrolyte-containing sheet by external stress. In addition, the binder has a large breaking elongation and thus exhibits a strong restorative force against a force under which the solid electrolyte-containing sheet is drawn by external stress and suppresses the breakage of the solid electrolyte-containing sheet. As a result, the solid electrolyte-containing sheet of the embodiment of the present invention is considered to exhibit scratch resistance.

In addition, in a case in which the polymer (B) that is included in the solid electrolyte-containing sheet of the embodiment of the present invention is particulate, and the volume-average particle diameter is 10 to 1,000 nm or less, in a process of forming the solid electrolyte-containing sheet of the embodiment of the present invention from the solid electrolyte composition of the embodiment of the present invention, the polymer (B) is considered to spread and wet more solid surfaces as the dispersion medium is removed. At this time, the average particle diameter of the polymer (B) is extremely small, and thus the polymer is considered to spread and wet solid particle surfaces without fully covering the solid particle surfaces and is capable of significantly decreasing the inhibition of the ion conductivity while exhibiting the above-described bonding property. As a result, the solid electrolyte-containing sheet of the embodiment of the present invention becomes capable of satisfying a high bonding property and a high ion conductivity, and the solid electrolyte-containing sheet of the embodiment of the present invention is considered to exhibit a high battery voltage and excellent scratch resistance.

The solid electrolyte-containing sheet of the embodiment of the present invention can be preferably used in all-solid state secondary batteries and is modified in a variety of aspects depending on the uses. Examples thereof include a sheet that is preferably used in a solid electrolyte layer (also referred to as a solid electrolyte sheet for an all-solid state secondary battery or a solid electrolyte sheet), a sheet that is preferably used in an electrode or a laminate of an electrode and a solid electrolyte layer (an electrode sheet for an all-solid state secondary battery), and the like. In addition, the solid electrolyte-containing sheet of the embodiment of the present invention can also be preferably used as an ion separation film or an ion exchange film. For example, the solid electrolyte-containing sheet can be used as an ion exchange film in an ion exchange film electrodialysis.

The solid electrolyte-containing sheet needs to be a sheet having a solid electrolyte layer or an active material layer (electrode layer) and may be a sheet having a solid electrolyte layer or an active material layer (electrode layer) formed on a base material or a sheet formed of a solid electrolyte layer or an active material layer (electrode layer) without having a base material. Hereinafter, a sheet in an aspect in which a solid electrolyte layer or an active material layer (electrode layer) is provided on a base material will be described in detail as an example.

The solid electrolyte-containing sheet may further have other layers as long as the sheet has the base material and the solid electrolyte layer or the active material layer, but a sheet containing an active material is classified into an electrode sheet for an all-solid state secondary battery described below. Examples of other layers include a protective layer, a collector, a coating layer (a collector, a solid electrolyte layer, or an active material layer), and the like.

Examples of the solid electrolyte sheet for an all-solid state secondary battery include a sheet having a solid electrolyte layer and a protective layer on a base material in this order.

The base material is not particularly limited as long as the base material is capable of supporting the solid electrolyte layer, and examples thereof include sheet bodies (plate-like bodies) of materials, organic materials, inorganic materials, and the like described in the section of the collector described below. Examples of the organic materials include a variety of polymers and the like, and specific examples thereof include polyethylene terephthalate, polypropylene, polyethylene, cellulose, and the like. Examples of the inorganic materials include glass, ceramic, and the like.

Unless particularly otherwise described, the types of components contained in each of the solid electrolyte layer and the active material layer in the solid electrolyte-containing sheet and the content ratios thereof are preferably identical to those in the solid contents of the solid electrolyte composition.

The layer thickness of the solid electrolyte layer in the solid electrolyte-containing sheet is identical to the layer thickness of the solid electrolyte layer described in the section of an all-solid state secondary battery according to the preferred embodiment of the present invention.

An electrode sheet for an all-solid state secondary battery of the embodiment of the present invention (also simply referred to as "the electrode sheet"; meanwhile, there is also a case in which an electrode sheet for a positive electrode is referred to as "positive electrode sheet" and an electrode sheet for a negative electrode is referred to as "negative electrode sheet") is a sheet for forming an active material layer in an all-solid state secondary battery and has an active material layer on a metal foil as a collector. This electrode sheet is generally a sheet having a collector and an active material layer, and an aspect of having a collector, an active material layer, and a solid electrolyte layer in this order and an aspect of having a collector, an active material layer, a solid electrolyte layer, and an active material layer in this order are also considered as the electrode sheet.

The layer thicknesses of the respective layers constituting the electrode sheet are identical to the layer thicknesses of individual layers described in the section of an all-solid state secondary battery according to the preferred embodiment of the present invention.

### [All-solid state secondary battery]

An all-solid state secondary battery of the embodiment of the present invention has a positive electrode, a negative electrode facing the positive electrode, and a solid electrolyte layer between the positive electrode and the negative electrode. The positive electrode has a positive electrode active material layer on a positive electrode collector. The negative electrode has a negative electrode active material layer on a negative electrode collector.

At least one layer of the negative electrode active material layer, the positive electrode active material layer, or the solid electrolyte layer is formed using the solid electrolyte composition of the embodiment of the present invention. In addition, at least one layer of the negative electrode active material layer, the positive electrode active material layer, or the solid electrolyte layer is the solid electrolyte-containing sheet of the embodiment of the present invention.

Unless particularly otherwise described, preferably, the kinds and the content ratio of the components of the active material layers and/or the solid electrolyte layer formed using the solid electrolyte composition are basically the same as those of the solid contents of the solid electrolyte composition. In a case in which the polymer (B) that is used in the present invention has a crosslinking functional group and/or a functional group selected from the group of functional groups (II) capable of bonding with solid particles, an aspect in which a crosslinking structure is formed and/or an aspect in which bonds are formed between solid particles are also considered as the polymer (B).

Hereinafter, a preferred embodiment of the present invention will be described with reference to Fig. 1, but the present invention is not limited thereto.

### [Positive electrode active material layer, solid electrolyte layer, and negative electrode active material layer]

In the all-solid state secondary battery 10, at least one of the positive electrode active material layer, the solid electrolyte layer, or the negative electrode active material layer is produced using the solid electrolyte composition of the embodiment of the present invention.

That is, the solid electrolyte layer 3 is produced using the solid electrolyte composition of the embodiment of the present invention, the solid electrolyte layer 3 includes the inorganic solid electrolyte (A) and the binder (B). The solid electrolyte layer, generally, does not include any positive electrode active material and/or any negative electrode active material.

In a case in which the positive electrode active material layer 4 and/or the negative electrode active material layer 2 are produced using the solid electrolyte composition of the embodiment of the present invention containing an active material, the positive electrode active material layer 4 and the negative electrode active material layer 2 respectively include a positive electrode active material or a negative electrode active material and further include the inorganic solid electrolyte (A) and the binder (B). In a case in which the active material layers contain the inorganic solid electrolyte, it is possible to improve the ion conductivity.

The kinds of the inorganic solid electrolytes (A) and the binders (B) that the positive electrode active material layer 4, the solid electrolyte layer 3, and the negative electrode active material layer 2 contain may be identical to or different from each other.

### [Collector (Metal Foil)]

The positive electrode collector 5 and the negative electrode collector 1 are preferably an electron conductor.

In the present invention, there are cases in which any or both of the positive electrode collector and the negative electrode collector will be simply referred to as the collector.

As a material forming the positive electrode collector, aluminum, an aluminum alloy, stainless steel, nickel, titanium, or the like, and furthermore, a material obtained by treating the surface of aluminum or stainless steel with carbon, nickel, titanium, or silver (a material forming a thin film) is preferred, and, among these, aluminum and an aluminum alloy are more preferred.

As a material forming the negative electrode collector, aluminum, copper, a copper alloy, stainless steel, nickel, titanium, or the like, and furthermore, a material obtained by treating the surface of aluminum, copper, a copper alloy, or stainless steel with carbon, nickel, titanium, or silver is preferred, and aluminum, copper, a copper alloy, or stainless steel is more preferred.

Regarding the shape of the collector, generally, collectors having a film sheet-like shape are used, but it is also possible to use net-shaped collectors, punched collectors, compacts of lath bodies, porous bodies, foaming bodies, or fiber groups, and the like.

The thickness of the collector is not particularly limited, but is preferably 1 to 500 µm. In addition, the surface of the collector is preferably provided with protrusions and recesses by means of a surface treatment.

In the present invention, a functional layer, member, or the like may be appropriately interposed or disposed between the respective layers of the negative electrode collector, the negative electrode active material layer, the solid electrolyte layer, the positive electrode active material layer, and the positive electrode collector or on the outside thereof. In addition, the respective layers may be composed of a single layer or multiple layers.

### [Chassis]

It is possible to produce the basic structure of the all-solid state secondary battery by disposing the respective layers described above. Depending on the use, the basic structure may be directly used as an all-solid state secondary battery, but the basic structure may be used after being enclosed in an appropriate chassis in order to have a dry battery form. The chassis may be a metallic chassis or a resin (plastic) chassis. In a case in which a metallic chassis is used, examples thereof include an aluminum alloy chassis and a stainless-steel chassis. The metallic chassis is preferably classified into a positive electrode-side chassis and a negative electrode-side chassis and electrically connected to the positive electrode collector and the negative electrode collector respectively. The positive electrode-side chassis and the negative electrode-side chassis are preferably integrated by being joined together through a gasket for short circuit prevention.

### [Manufacturing of solid electrolyte sheet]

The solid electrolyte sheet of the embodiment of the present invention is obtained by forming a film of the solid electrolyte composition (preferably having the dispersion medium (D)) of the embodiment of the present invention on a base material (possibly, through a different layer) (application and drying) and forming a solid electrolyte layer on the base material.

With the above-described aspect, it is possible to produce a solid electrolyte sheet having (the solid electrolyte layer containing) the inorganic solid electrolyte (A) and the binder (B) on a base material. In addition, it is also possible to peel the base material off from the produced solid electrolyte sheet and produce a solid electrolyte sheet formed of a solid electrolyte layer. In addition, a solid electrolyte layer described in the section of the method for manufacturing an all-solid state secondary battery is also regarded as the solid electrolyte sheet of the embodiment of the present invention.

Additionally, regarding steps such as application, it is possible to use a method described in the following section of the manufacturing of an all-solid state secondary battery.

Meanwhile, the solid electrolyte sheet may also contain a dispersion medium (D) as long as the battery performance is not affected. Specifically, the content of the dispersion medium may be 1 ppm or more and 10,000 ppm or less of the total mass. In addition, the electrode sheet for an all-solid state secondary battery may also contain the dispersion medium (D) to an extent in which the battery performance is not affected. Specifically, the content of the dispersion medium may be 1 ppm or more and 10,000 ppm or less of the total mass.

Meanwhile, the content proportion of the dispersion medium (D) in the solid electrolyte-containing sheet of the embodiment of the present invention can be measured using the following method.

A 20 mm×20 mm specimen was cut out from the solid electrolyte-containing sheet by punching and immersed in heavy tetrahydrofuran in a glass bottle. The obtained eluted substance is filtered using a syringe filter, and a quantitative operation by ¹H-NMR is carried out. The correlation between the ¹H-NMR peak surface area and the amount of the solvent is obtained by producing a calibration curve.

### [All-solid state secondary battery and manufacturing of electrode sheet for all-solid state secondary battery]

The all-solid state secondary battery and the electrode sheet for an all-solid state secondary battery can be manufactured using an ordinary method. Specifically, the all-solid state secondary battery and the electrode sheet for an all-solid state secondary battery can be manufactured by forming the respective layers described above using the solid electrolyte composition of the embodiment of the present invention or the like. Hereinafter, the manufacturing method will be described in detail.

The all-solid state secondary battery of the embodiment of the present invention can be manufactured using a method including (through) a step of applying the solid electrolyte composition of the embodiment of the present invention onto a base material (for example, a metal foil which serves as a collector) and forming a coated film (film manufacturing).

For example, a solid electrolyte composition containing a positive electrode active material is applied as a material for a positive electrode (a composition for a positive electrode) onto a metal foil which is a positive electrode collector so as to form a positive electrode active material layer, thereby producing a positive electrode sheet for an all-solid state secondary battery. Next, a solid electrolyte composition for forming a solid electrolyte layer is applied onto the positive electrode active material layer so as to form a solid electrolyte layer. Furthermore, a solid electrolyte composition containing a negative electrode active material is applied as a material for a negative electrode (a composition for a negative electrode) onto the solid electrolyte layer so as to form a negative electrode active material layer. A negative electrode collector (a metal foil) is overlaid on the negative electrode active material layer, whereby it is possible to obtain an all-solid state secondary battery having a structure in which the solid electrolyte layer is sandwiched between the positive electrode active material layer and the negative electrode active material layer. A desired all-solid state secondary battery can be produced by enclosing the all-solid state secondary battery in a chassis as necessary.

In addition, it is also possible to manufacture an all-solid state secondary battery by carrying out the methods for forming the respective layers in a reverse order so as to form a negative electrode active material layer, a solid electrolyte layer, and a positive electrode active material layer on a negative electrode collector and overlaying a positive electrode collector thereon.

As another method, the following method can be exemplified. That is, a positive electrode sheet for an all-solid state secondary battery is produced as described above. In addition, a solid electrolyte composition containing a negative electrode active material is applied as a material for a negative electrode (a composition for a negative electrode) onto a metal foil which is a negative electrode collector so as to form a negative electrode active material layer, thereby producing a negative electrode sheet for an all-solid state secondary battery. Next, a solid electrolyte layer is formed on the active material layer in any one of these sheets as described above. Furthermore, the other one of the positive electrode sheet for an all-solid state secondary battery and the negative electrode sheet for an all-solid state secondary battery is laminated on the solid electrolyte layer so that the solid electrolyte layer and the active material layer come into contact with each other. An all-solid state secondary battery can be manufactured as described above.

As still another method, the following method can be exemplified. That is, a positive electrode sheet for an all-solid state secondary battery and a negative electrode sheet for an all-solid state secondary battery are produced as described above. In addition, separately from the positive electrode sheet for an all-solid state secondary battery and the negative electrode sheet for an all-solid state secondary battery, a solid electrolyte composition is applied onto a base material, thereby producing a solid electrolyte sheet for an all-solid state secondary battery consisting of a solid electrolyte layer. Furthermore, the positive electrode sheet for an all-solid state secondary battery and the negative electrode sheet for an all-solid state secondary battery are laminated together so as to sandwich the solid electrolyte layer that has been peeled off from the base material. An all-solid state secondary battery can be manufactured as described above.

An all-solid state secondary battery can be manufactured by combining the above-described forming methods. For example, a positive electrode sheet for an all-solid state secondary battery, a negative electrode sheet for an all-solid state secondary battery, and a solid electrolyte sheet for an all-solid state secondary battery are produced respectively. Next, a solid electrolyte layer peeled off from a base material is laminated on the negative electrode sheet for an all-solid state secondary battery and is then attached to the positive electrode sheet for an all-solid state secondary battery, whereby an all-solid state secondary battery can be manufactured. In this method, it is also possible to laminate the solid electrolyte layer on the positive electrode sheet for an all-solid state secondary battery and attach the solid electrolyte layer to the negative electrode sheet for an all-solid state secondary battery.

Meanwhile, similar to the above-described solid electrolyte sheet, the electrode sheet for an all-solid state secondary battery of the embodiment of the present invention may not have the base material.

### (Formation of Individual Layers (Film Formation))

The method for applying the solid electrolyte composition is not particularly limited and can be appropriately selected. Examples thereof include coating (preferably wet-type coating), spray coating, spin coating, dip coating, slit coating, stripe coating, and bar coating.

At this time, the solid electrolyte composition may be dried after being applied or may be dried after being applied to multiple layers. The drying temperature is not particularly limited. The lower limit is preferably 30°C or higher, more preferably 60°C or higher, and still more preferably 80°C or higher, and the upper limit is preferably 300°C or lower, more preferably 250°C or lower, and still more preferably 200°C or lower. In a case in which the compositions are heated in the above-described temperature range, it is possible to remove the dispersion medium (D) and form a solid state. In addition, the temperature is not excessively increased, and the respective members of the all-solid state secondary battery are not impaired, which is preferable. Therefore, in the all-solid state secondary battery, excellent total performance is exhibited, and it is possible to obtain a favorable bonding property.

After the production of the solid electrolyte-containing sheet or the all-solid state secondary battery, the respective layers or the all-solid state secondary battery is preferably pressurized. In addition, the respective layers are also preferably pressurized in a state of being laminated together. Examples of the pressurization method include a hydraulic cylinder pressing machine and the like. The welding pressure is not particularly limited, but is, generally, preferably in a range of 50 to 1,500 MPa.

In addition, the applied solid electrolyte composition may be heated at the same time as pressurization. The heating temperature is not particularly limited, but is generally in a range of 30°C to 300°C. The respective layers or the all-solid state secondary battery can also be pressed at a temperature higher than the glass transition temperature of the inorganic solid electrolyte.

The pressurization may be carried out in a state in which the applied solvent or dispersion medium has been dried in advance or in a state in which the solvent or the dispersion medium remains.

Meanwhile, the respective compositions may be applied at the same time, and the application, the drying, and the pressing may be carried out simultaneously and/or sequentially. The respective compositions may be applied to separate base materials and then laminated by means of transfer.

The atmosphere during the pressurization is not particularly limited and may be any one of in the atmosphere, under the dried air (the dew point: -20°C or lower), in an inert gas (for example, in an argon gas, in a helium gas, or in a nitrogen gas), and the like.

The pressing time may be a short time (for example, within several hours) at a high pressure or a long time (one day or longer) under the application of an intermediate pressure. In the case of members other than the sheet for an all-solid state secondary battery, for example, the all-solid state secondary battery, it is also possible to use a restraining device (screw fastening pressure or the like) of the all-solid state secondary battery in order to continuously apply an intermediate pressure.

The pressing pressure may be a pressure that is constant or varies with respect to a portion under pressure such as a sheet surface.

The pressing pressure can be changed depending on the area or film thickness of the portion under pressure. In addition, it is also possible to change the same portion with a pressure that varies stepwise.

A pressing surface may be flat or roughened.

### (Initialization)

The all-solid state secondary battery manufactured as described above is preferably initialized after the manufacturing or before the use. The initialization is not particularly limited, and it is possible to initialize the all-solid state secondary battery by, for example, carrying out initial charging and discharging in a state in which the pressing pressure is increased and then releasing the pressure up to a pressure at which the all-solid state secondary battery is ordinarily used.

### [Usages of all-solid state secondary battery]

The all-solid state secondary battery of the embodiment of the present invention can be applied to a variety of usages. Application aspects are not particularly limited, and, in the case of being mounted in electronic devices, examples thereof include notebook computers, pen-based input personal computers, mobile personal computers, e-book players, mobile phones, cordless phone handsets, pagers, handy terminals, portable faxes, mobile copiers, portable printers, headphone stereos, video movies, liquid crystal televisions, handy cleaners, portable CDs, mini discs, electric shavers, transceivers, electronic notebooks, calculators, portable tape recorders, radios, backup power supplies, memory cards, and the like. Additionally, examples of consumer usages include automobiles (electric cars and the like), electric vehicles, motors, lighting equipment, toys, game devices, road conditioners, watches, strobes, cameras, medical devices (pacemakers, hearing aids, shoulder massage devices, and the like), and the like. Furthermore, the all-solid state secondary battery can be used for a variety of military usages and universe usages. In addition, the all-solid state secondary battery can also be combined with solar batteries.

All-solid state secondary batteries refer to secondary batteries having a positive electrode, a negative electrode, and an electrolyte which are all composed of solid. In other words, all-solid state secondary batteries are differentiated from electrolytic solution-type secondary batteries in which a carbonate-based solvent is used as an electrolyte. Among these, the present invention is assumed to be an inorganic all-solid state secondary battery. All-solid state secondary batteries are classified into organic (high-molecular-weight) all-solid state secondary batteries in which a high-molecular-weight compound such as polyethylene oxide is used as an electrolyte and inorganic all-solid state secondary batteries in which the Li-P-S-based glass, LLT, LLZ, or the like is used. Meanwhile, the application of organic compounds to inorganic all-solid state secondary batteries is not inhibited, and organic compounds can also be applied as binders or additives of positive electrode active materials, negative electrode active materials, and inorganic solid electrolytes.

Inorganic solid electrolytes are differentiated from electrolytes in which the above-described high-molecular-weight compound is used as an ion conductive medium (high-molecular-weight electrolyte), and inorganic compounds serve as ion conductive media. Specific examples thereof include the Li-P-S glass, LLT, and LLZ. Inorganic solid electrolytes do not emit positive ions (Li ions) and exhibit an ion transportation function. In contrast, there are cases in which materials serving as an ion supply source which is added to electrolytic solutions or solid electrolyte layers and emits positive ions (Li ions) are referred to as electrolytes; however, in the case of being differentiated from electrolytes as the ion transportation materials, the materials are referred to as "electrolyte salts" or "supporting electrolytes". Examples of the electrolyte salts include LiTFSI.

In the present invention, "compositions" refer to mixtures obtained by uniformly mixing two or more components. Here, compositions may partially include agglomeration or uneven distribution as long as the compositions substantially maintain uniformity and exhibit desired effects.

### Examples

Hereinafter, the present invention will be described in more detail on the basis of examples. Meanwhile, the present invention is not interpreted to be limited thereto. "Parts" and "%" that represent compositions in the following examples are mass-based unless particularly otherwise described. In addition, "room temperature" refers to 25°C.

### <Synthesis of sulfide-based inorganic solid electrolyte LPS>

As a sulfide-based inorganic solid electrolyte, Li-P-S-based glass was synthesized with reference to a non-patent document of T. Ohtomo, A. Hayashi, M. Tatsumisago, Y. Tsuchida, S. HamGa, K. Kawamoto, Journal of Power Sources, 233, (2013), pp. 231 to 235 and A. Hayashi, S. Hama, H. Morimoto, M. Tatsumisago, T. Minami, Chem. Lett., (2001), pp. 872 and 873.

Specifically, in a glove box under an argon atmosphere (dew point: -70°C), lithium sulfide (Li₂S, manufactured by Aldrich-Sigma, Co. LLC. Purity: >99.98%) (2.42 g) and diphosphorus pentasulfide (P₂S₅, manufactured by Aldrich-Sigma, Co. LLC. Purity: >99%) (3.90 g) were respectively weighed, injected into an agate mortar, and mixed using an agate muddler for five minutes. The mixing ratio between Li₂S and P₂S₅ was set to 75:25 in terms of molar ratio.

Zirconia beads (66 g) having a diameter of 5 mm were injected into a 45 mL zirconia container (manufactured by Fritsch Japan Co., Ltd.), the full amount of the mixture of the lithium sulfide and the diphosphorus pentasulfide was injected thereinto, and the container was completely sealed in an argon atmosphere. The container was set in a planetary ball mill P-7 (trade name, manufactured by Fritsch Japan Co., Ltd.) manufactured by Fritsch Japan Co., Ltd., mechanical milling was carried out at a temperature of 25°C and a rotation speed of 510 rpm for 20 hours, thereby obtaining yellow powder (6.20 g) of a sulfide-based inorganic solid electrolyte (Li-P-S glass, expressed as LPS in some cases).

### <Preparation example of polymer (B) dispersion liquid or solution>

Hereinafter, a preparation example of a polymer (B) dispersion liquid or solution will be described. Meanwhile, the average particle diameter of a polymer will be described only for polymers that are present in a particle form in a dispersion medium.

### (Preparation of polymer (B-10) dispersion liquid)

1,4-Butanediol (0.20 g), 2,2-bis(hydroxymethyl)butyric acid (0.41 g), polycarbonate diol (trade name: ETERNACOLL UH-200, manufactured by Ube Industries, Ltd., Mw: 2,000) (10.0 g), and trimethylolpropane (0.193 g) (manufactured by Tokyo Chemical Industry Co., Ltd.) were added to a 200 mL three-neck flask and dissolved in methyl ethyl ketone (MEK) (22 g). 4,4'-Dicyclohexylmethane diisocyanate (3.8 g) was added to this solution, stirred at 80°C, and uniformly dissolved. NEOSTANN U-600 (trade name, bismuth-based catalyst, manufactured by Nittoh Chemical Co., Ltd.) (100 mg) was added to this solution and stirred at 80°C for four hours, thereby obtaining a prepolymer having Mw of 27,000. A THF solution (5 g) of EPOL (trade name, terminal diol-modified hydrogenated polyisoprene, manufactured by Idemitsu Kosan Co., Ltd., Mw: 2,500) (3.7 g) was added to this prepolymer, and, furthermore, continuously stirred at 80°C for four hours, thereby obtaining a viscous polymer solution that became white turbid. Methanol (1 g) was added to this solution to seal the polymer terminal, thereby stopping the polymerization reaction, and the solution was diluted with MEK, thereby obtaining a 20% by mass MEK solution of a polymer (B-10). The weight-average molecular weight was 33,000.

Next, octane (96 g) was added dropwise to the polymer solution obtained above for one hour under stirring at 500 rpm, thereby obtaining an emulsified liquid of the polymer. This emulsified liquid was heated at 85°C for 120 minutes under the flow of nitrogen. Furthermore, octane (50 g) was added to the residue, the components were heated at 85°C for 60 minutes four times in the same manner to remove MEK, thereby obtaining a 10% by mass octane dispersion liquid of a polymer (B-10). Mw of the polymer (B-10) was 51,000, and the average particle diameter was 300 nm.

The polymer (B-10) has a carboxy group and has a crosslinking structure represented by General Formula (1) (m1=3, n1=1, R=ethyl, Y¹=methanetetrayl, L=-CH₂-, X=oxygen atom). Both a hard segment and a soft segment were included.

### (Preparation of polymer (B-7) dispersion liquid)

A 10% by mass octane dispersion liquid of a polymer (B-7) was obtained in the same manner as in the preparation of the polymer (B-10) dispersion liquid except for the fact that, as the polycarbonate diol, DURANOL T5650J (trade name, manufactured by Asahi Kasei Corporation, Mw 800) was used instead of ETERNACOLL UH-200. The weight-average molecular weight of the polymer (B-7) was 66,000, and the average particle diameter was 290 nm.

The polymer (B-7) has a carboxy group and has a crosslinking structure represented by General Formula (1) (m1=3, n1=1, R=ethyl, Y¹=methanetetrayl, L=-CH₂-, X=oxygen atom). Both a hard segment and a soft segment were included.

### (Preparation of polymer (B-6) dispersion liquid)

A 10% by mass octane dispersion liquid of a polymer (B-6) was obtained in the same manner as in the preparation of the polymer (B-10) dispersion liquid except for the fact that, as the polycarbonate diol, DURANOL G3450J (trade name, manufactured by Asahi Kasei Corporation, Mw 2,000) was used instead of ETERNACOLL UH-200. The weight-average molecular weight of the polymer (B-6) was 51,000, and the average particle diameter was 330 nm.

The polymer (B-6) has a carboxy group and has a crosslinking structure represented by General Formula (1) (m1=3, n1=1, R=ethyl, Y¹=methanetetrayl, L=-CH₂-, X=oxygen atom). Both a hard segment and a soft segment were included.

### (Preparation of polymer (B-13) dispersion liquid)

1,4-Butanediol (0.30 g), 2,2-bis(hydroxymethyl)butyric acid (0.45 g), polycarbonate diol (trade name: DURANOL T5650J, manufactured by Asahi Kasei Corporation, Mw: 800) (4.2 g), and SeRM SH1310P (trade name, manufactured by Advanced Softmaterials Inc.) (0.55 g) were added to a 200 mL three-neck flask and dissolved in MEK (13 g). 4,4'-Dicyclohexylmethane diisocyanate (3.8 g) was added to this solution, stirred at 80°C, and uniformly dissolved. NEOSTANN U-600 (100 mg) was added to this solution and stirred at 80°C for four hours, thereby obtaining a prepolymer having Mw of 27,000. A THF solution (5 g) of EPOL (trade name, terminal diol-modified hydrogenated polyisoprene, manufactured by Idemitsu Kosan Co., Ltd., Mw: 2,500) (3.7 g) was added to the obtained prepolymer, and, furthermore, continuously stirred at 80°C for four hours, thereby obtaining a viscous polymer solution that became white turbid. Methanol (1 g) was added to this solution to seal the polymer terminal, thereby stopping the polymerization reaction, and the solution was diluted with MEK, thereby obtaining a 20% by mass MEK solution of a polymer (B-13).

Next, octane (96 g) was added dropwise to the polymer solution obtained above for one hour under stirring at 500 rpm, thereby obtaining an emulsified liquid of the polymer. This emulsified liquid was heated at 85°C for 120 minutes under the flow of nitrogen. Furthermore, octane (50 g) was added to the residue, the components were heated at 85°C for 60 minutes four times in the same manner to remove MEK, thereby obtaining a 10% by mass octane dispersion liquid of the polymer (B-13). Mw of the polymer (B-13) was 53,000, and the average particle diameter was 390 nm.

The polymer (B-13) has a carboxy group and has modified polyrotaxane-graft-polycaprolactone as a crosslinking structure. Both a hard segment and a soft segment were included.

### (Preparation of polymer (B-3) dispersion liquid)

Trimethylolpropane (manufactured by Tokyo Chemical Industry Co., Ltd.) (5.4 g), ε-caprolactone (manufactured by Wako Pure Chemical Industries, Ltd.) (68 g), and monobutyl tin oxide (manufactured by Wako Pure Chemical Industries, Ltd.) (0.034 g) were prepared in a 200 mL flask, heated to 90°C, and stirred for five hours. After that, the components were heated to 150°C and stirred for 2.5 hours, thereby obtaining a polyester having a trifunctional hydroxy group. The weight-average molecular weight of the polyester having a trifunctional hydroxy group was measured by GPC and found out to be 4,600.

1,4-Butanediol (0.27 g), 2,2-bis(hydroxymethyl)butyric acid (0.44 g), polycarbonate diol (trade name: DURANOL T5650J, manufactured by Asahi Kasei Corporation, Mw: 800) (1.0 g), and the polyester (7 g) having a trifunctional hydroxy group were added to a 200 mL three-neck flask and dissolved in MEK (15 g). 4,4'-Dicyclohexylmethane diisocyanate (3.8 g) was added to this solution, stirred at 80°C, and uniformly dissolved. NEOSTANN U-600 (100 mg) was added to this solution and stirred at 80°C for four hours, thereby obtaining a prepolymer having Mw of 21,000. A THF solution (5 g) of EPOL (trade name, terminal diol-modified hydrogenated polyisoprene, manufactured by Idemitsu Kosan Co., Ltd., Mw: 2,500) (1.4 g) was added to the obtained prepolymer and, furthermore, continuously stirred at 80°C for four hours, thereby obtaining a viscous polymer solution that became white turbid. Methanol (2 g) was added to this solution to seal the polymer terminal, thereby stopping the polymerization reaction, and the solution was diluted with MEK, thereby obtaining a 20% by mass MEK solution of a polymer (B-3).

Next, octane (96 g) was added dropwise to the polymer solution obtained above for one hour under stirring at 500 rpm, thereby obtaining an emulsified liquid of the polymer. This emulsified liquid was heated at 85°C for 120 minutes under the flow of nitrogen. Furthermore, octane (50 g) was added to the residue, the components were heated at 85°C for 60 minutes four times in the same manner to remove MEK, thereby obtaining a 10% by mass octane dispersion liquid of the polymer (B-3). Mw of the polymer (B-3) was 78,000, and the average particle diameter was 380 nm.

The polymer (B-3) has a carboxy group and has a crosslinking structure represented by General Formula (1) (m1=3, n1=1, R=ethyl, Y¹=isobutanetetrayl, L=polyester, X=oxygen atom). Both a hard segment and a soft segment were included.

### (Preparation of polymer (B-8) dispersion liquid)

1,4-Butanediol (0.54 g), 2,2-bis(hydroxymethyl)butyric acid (0.89 g), and polycarbonate diol (trade name: ETERNACOLL UH-100, manufactured by Ube Industries, Ltd., Mw: 2,000) (12.0 g) were added to a 200 mL three-neck flask and dissolved in MEK (31 g). 4,4'-Dicyclohexylmethane diisocyanate (7.6 g) was added to this solution, stirred at 80°C, and uniformly dissolved. NEOSTANN U-600 (100 mg) was added to this solution and stirred at 80°C for four hours, thereby obtaining a prepolymer having Mw of 20,000. A THF solution (5 g) of EPOL (trade name, terminal diol-modified hydrogenated polyisoprene, manufactured by Idemitsu Kosan Co., Ltd., Mw: 2,500) (5.3 g) was added to the obtained prepolymer, and, furthermore, continuously stirred at 80°C for four hours, thereby obtaining a viscous polymer solution that became white turbid. Methanol (1 g) was added to this solution to seal the polymer terminal, thereby stopping the polymerization reaction, and the solution was diluted with MEK, thereby obtaining a 20% by mass MEK solution of a polymer (B-8).

Next, octane (96 g) was added dropwise to the polymer solution obtained above for one hour under stirring at 500 rpm, thereby obtaining an emulsified liquid of the polymer. This emulsified liquid was heated at 85°C for 120 minutes under the flow of nitrogen. Furthermore, octane (50 g) was added to the residue, the components were heated at 85°C for 60 minutes four times in the same manner to remove MEK, thereby obtaining a 10% by mass octane dispersion liquid of a polymer (B-8). Mw of the polymer (B-8) was 37,000, and the average particle diameter was 250 nm.

The polymer (B-8) has a carboxy group and does not include any crosslinking structure. Both a hard segment and a soft segment were included.

### (Preparation of polymer (B-14) dispersion liquid)

A 10% by mass octane dispersion liquid of a polymer (B-14) was obtained in the same manner as in the preparation of the polymer (B-8) dispersion liquid except for the fact that, as the polycarbonate diol, ETERNACOLL UH-50 (trade name, Ube Industries, Ltd., Mw: 500) was used instead of ETERNACOLL UH-100. Mw of the polymer (B-14) was 17,000, and the average particle diameter was 220 nm.

The polymer (B-14) has a carboxy group and does not include any crosslinking structure. Both a hard segment and a soft segment were included.

### (Preparation of polymer (B-15) dispersion liquid)

A 10% by mass octane dispersion liquid of a polymer (B-15) was obtained in the same manner as in the preparation of the polymer (B-8) dispersion liquid except for the fact that, as the polycarbonate diol, ETERNACOLL UH-100 was changed to ETERNACOLL UH-200 (trade name, Ube Industries, Ltd., Mw: 2,000). Mw of the polymer (B-15) was 33,000, and the average particle diameter was 290 nm.

The polymer (B-15) has a carboxy group and does not include any crosslinking structure. Both a hard segment and a soft segment were included.

### (Preparation of polymer (B-1) solution)

A 20% by mass solution of a polymer (B-1) was obtained by adding 1,4-dioxane (40 g) to ELSTOLLAN ET680 (trade name, manufactured by NTW Co., Ltd.) (10 g) and heating the mixture to 80°C to dissolve 1,4-dioxane.

### (Preparation of polymer (B-2) solution)

A 20% by mass solution of a polymer (B-2) was obtained by adding 1,4-dioxane (40 g) to PRIMALLOY A1704 (trade name, manufactured by Mitsubishi Chemical Corporation) (10 g) and heating the mixture to 80°C to dissolve 1,4-dioxane.

### (Preparation of polymer (B-4) solution)

A 20% by mass solution of a polymer (B-4) was obtained by adding butyl butyrate (40 g) to TRIJECT XB-A90 (trade name, manufactured by Aronkasei Co., Ltd.) (10 g) and heating the mixture to 80°C to dissolve butyl butyrate.

### (Preparation of polymer (B-5) solution)

A 20% by mass solution of a polymer (B-5) was obtained by adding toluene (40 g) to UPIZETA FPC-2136 (trade name, manufactured by Mitsubishi Chemical Corporation) (10 g) and heating the mixture to 80°C to dissolve toluene.

### (Preparation of polymer (B-9) solution)

A 20% by mass solution of a polymer (B-9) was obtained by adding isobutyronitrile (40 g) to NIPOL 1041 (trade name, manufactured by Zeon Corporation) (10 g) and heating the mixture to 80°C to dissolve isobutyronitrile.

The polymer (B-9) did not include any hard segment, but included a soft segment.

### (Preparation of polymer (B-11) solution)

A 20% by mass solution of a polymer (B-1 1) was obtained by adding 1,4-dioxane (40 g) to UNITIKA NYLON 6 A1030BRF (trade name, manufactured by Unitika Ltd.) (10 g) and heating the mixture to 80°C to dissolve 1,4-dioxane.

### (Preparation of polymer (B-12) solution)

A 20% by mass solution of a polymer (B-12) was obtained by adding 1,4-dioxane (40 g) to TEONEX (trade name, manufactured by Teijin Film Solutions Limited) (10 g) and heating the mixture to 80°C to dissolve 1,4-dioxane.

### (Preparation of polymer (B-16) solution)

A 20% by mass solution of a polymer (B-16) was obtained by adding isobutyronitrile (40 g) to KYNAR FLEX 3120-50 (trade name, manufactured by Arkema K.K.) (10 g) and heating the mixture to 80°C to dissolve isobutyronitrile.

The polymer (B-16) did not include any hard segment, but included a soft segment.

### <Production example of test specimen for tensile test and outline of test >

### (Production of test specimen for test)

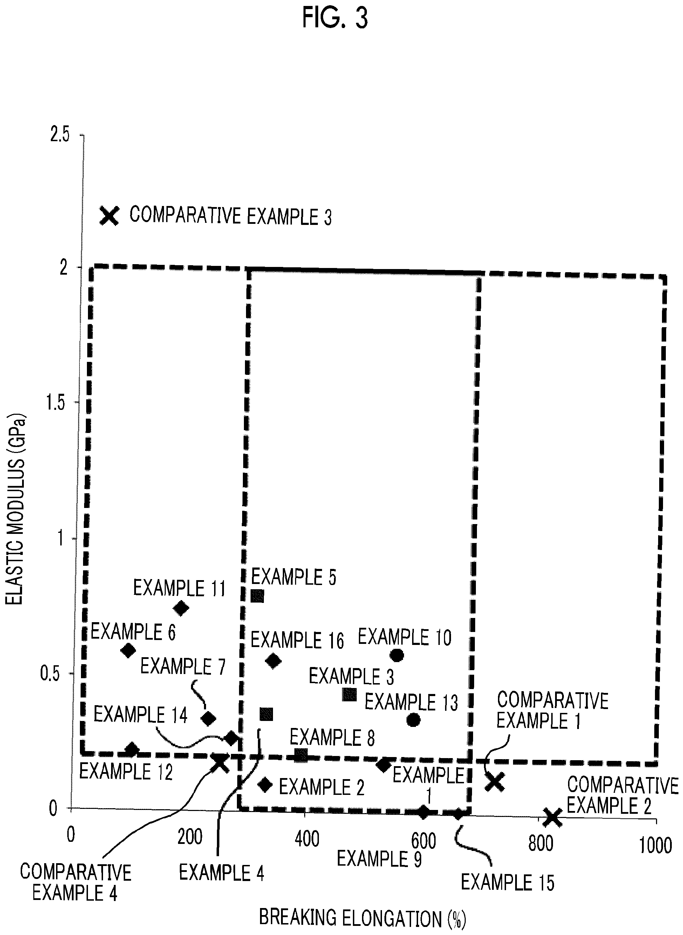

The dispersion liquids or solutions of the polymers B-1 to 16 and T-1 to T-4 were applied onto a TEFLON (registered trademark) sheet using a Baker-type applicator (manufactured by Paltek Corporation), left to stand in an air blast dryer (manufactured by Yamato Scientific Co., Ltd.), and dried at 80°C for 40 hours. Next, a standard test specimen type 5 regulated by JIS K 7127 "Plastics - Determination of tensile properties - Part 3: Test conditions for films and sheets" was produced from the dried film using a Schopper-type specimen cutter (manufactured by Yasuda Seiki Seisakusho, Ltd.). Test specimens for a tensile test shown in Table 1 were prepared in the above-described manner. Here, Nos. B-1 to B-15 are invention examples, No. B-16 is a reference example, and Nos. T-1 to T-4 are comparative examples. In addition, in Fig. 3, Nos. B-1 to B-16 correspond to Examples 1 to 16, and Nos. T-1 to T-4 correspond to Comparative Examples 1 to 4 respectively.

### (Outline for carrying out tensile test)

A tensile test was carried out on the test specimens Nos. B-1 to B-16 and T-1 to T-4 produced using the above-described method using a digital force gauge ZTS-5N and a vertical electric measurement stand MX2 series (all trade names, manufactured by IMADA Co., Ltd.). Two gauge lines were drawn parallel to each other at an interval of 50 mm in the central portion of the test specimen, the test specimen was drawn at a rate of 10 mm per minute, and the elastic modulus, the breaking elongation, and the yield elongation were computed on the basis of JIS K 7161 "Plastics - Determination of tensile properties".

**[Table 1]**

| Polymer (B) | Kind of polymer | Dynamic characteristics of polymer | | | |
|---|---|---|---|---|---|
| | | Elastic modulus (GPa) | Breaking elongation (%) | Condition satisfied | Yield elongation (%) |
| B-1 | Polyurethane | 0.18 | 530 | Condition 1 | 21 |
| B-2 | Polyester | 0.1 | 330 | Condition 1 | 11 |
| B-3 | Polyurethane | 0.44 | 470 | Condition 3 | 21 |
| B-4 | Acryl | 0.36 | 330 | Condition 3 | 13 |
| B-5 | Polycarbonate | 0.8 | 310 | Condition 3 | 12 |
| B-6 | Polyurethane | 0.59 | 91 | Condition 2 | 12 |
| B-7 | Polyurethane | 0.34 | 230 | Condition 2 | 14 |
| B-8 | Polyurethane | 0.21 | 390 | Condition 3 | 14 |
| B-9 | HNBR | 0.011 | 600 | Condition 1 | 25 |
| B-10 | Polyurethane | 0.59 | 580 | Condition 3 | 30 |
| B-11 | Polyamide | 0.75 | 180 | Condition 2 | 14 |
| B-12 | Polyester | 0.22 | 100 | Condition 2 | 13 |
| B-13 | Polyurethane | 0.35 | 550 | Condition 3 | 29 |
| B-14 | Polyurethane | 0.27 | 270 | Condition 2 | 13 |
| B-15 | Polyurethane | 0.0034 | 660 | Condition 1 | 26 |
| B-16 | PVDF-HFP | 0.56 | 340 | Condition 3 | 9 |
| T-1 | HNBR | 0.13 | 720 | - | 32 |
| T-2 | HSBR | 0.0013 | 820 | - | 51 |
| T-3 | PI | 2.2 | 43 | - | 8 |
| T-4 | PVDF-HFP | 0.18 | 250 | - | 12 |

| | | | | | |
|---|---|---|---|---|---|
| <Notes of table> HNBR: Hydrogenated acrylonitrile butadiene rubber (manufactured by Zeon Corporation) HSBR: Hydrogenated styrene butadiene rubber (manufactured by JSR Corporation) PVDF-HFP: Copolymer of vinylidene fluoride and hexafluoropropylene (manufactured by Arkema K.K.) PI: Polyimide (manufactured by Ube Industries, Ltd.) "-" indicates that all of conditions 1 to 3 are not satisfied. | | | | | |

### [Example]

### <Preparation example of solid electrolyte composition>

One hundred eighty zirconia beads having a diameter of 5 mm were injected into a 45 mL zirconia container (manufactured by Fritsch Japan Co., Ltd.), the inorganic solid electrolyte, the polymer, and a dispersion medium were injected thereinto, then, the container was set in a planetary ball mill P-7 (trade name) manufactured by Fritsch Japan Co., Ltd., and the components were mixed together at room temperature and a rotation speed of 300 rpm for two hours, thereby preparing a solid electrolyte composition. Meanwhile, in a case in which the solid electrolyte composition contained an active material, the active material was injected thereinto and, furthermore, mixed therewith at room temperature for five minutes at a rotation speed of 150 rpm, thereby preparing a solid electrolyte composition. In addition, in a case in which the solid electrolyte composition contained a conductive auxiliary agent, the inorganic solid electrolyte, the polymer, and the conductive auxiliary agent were combined together, injected into the ball mill p-7, and mixed together, thereby preparing a solid electrolyte composition. Solid electrolyte compositions Nos. S-1 to S-16 and T'-1 to T'-4 shown in Table 2 were prepared in the above-described manner.

Here, Nos. S-1 to S-15 are invention examples, No. S-16 is a reference example, and Nos. T'-1 to T'-4 are comparative examples.

**[Table 2]**

| Solid electrolyte composition No. | (A) | Content (parts by mass) | (B) | Content (parts by mass) | (C) (Positive electrode) | Content (parts by mass) | (C) (Negative electrode) | Content (parts by mass) | (E) | Content (parts by mass) | (D) |
|---|---|---|---|---|---|---|---|---|---|---|---|
| S-1 | LLT | 5.0 | B-1 | 0.5 | - | - | - | - | - | - | Octane |
| S-2 | Li-P-S | 5.0 | B-2 | 0.5 | - | - | - | - | - | - | Octane |
| S-3 | Li-P-S | 5.0 | B-3 | 0.5 | LCO | 8.0 | - | - | AB | 0.2 | Octane |
| S-4 | Li-P-S | 5.0 | B-4 | 0.5 | LCO | 8.0 | - | - | AB | 0.2 | Heptane |
| S-5 | Li-P-S | 5.0 | B-5 | 0.5 | LCO | 8.0 | - | - | - | - | Octane |
| S-6 | Li-P-S | 5.0 | B-6 | 0.5 | - | - | Graphite | 6.0 | VGCF | 0.2 | Octane |
| S-7 | Li-P-S | 5.0 | B-7 | 0.5 | - | - | Graphite | 6.0 | AB | 0.2 | Octane |
| S-8 | Li-P-S | 5.0 | B-8 | 0.5 | - | - | - | - | - | - | Octane |
| S-9 | Li-P-S | 5.0 | B-9 | 0.5 | NMC | 8.0 | - | - | VGCF | 0.2 | Octane |
| S-10 | Li-P-S | 5.0 | B-10 | 0.5 | NMC | 8.0 | - | - | AB | 0.2 | Octane |
| S-11 | Li-P-S | 5.0 | B-11 | 0.5 | NMC | 8.0 | - | - | - | - | Octane |
| S-12 | Li-P-S | 5.0 | B-12 | 0.5 | - | - | - | - | - | - | Octane |
| S-13 | Li-P-S | 5.0 | B-13 | 0.5 | NCA | 8.0 | - | - | - | - | Octane |
| S-14 | Li-P-S | 5.0 | B-14 | 0.5 | NCA | 8.0 | - | - | AB | 0.2 | Octane |
| S-15 | Li-P-S | 5.0 | B-15 | 0.5 | - | - | Si | 6.0 | - | - | Octane |
| S-16 | Li-P-S | 5.0 | B-16 | 0.5 | - | - | Si | 6.0 | - | - | Octane |
| T'-1 | Li-P-S | 5.0 | T-1 | 0.5 | LCO | 8.0 | - | - | - | - | Octane |
| T'-2 | Li-P-S | 5.0 | T-2 | 0.5 | - | - | Graphite | 6.0 | - | - | Octane |
| T'-3 | Li-P-S | 5.0 | T-3 | 0.5 | LCO | 8.0 | - | - | - | - | Octane |
| T'-4 | Li-P-S | 5.0 | T-4 | 0.5 | - | - | Graphite | 6.0 | - | - | Octane |

| | | | | | | | | | | | |
|---|---|---|---|---|---|---|---|---|---|---|---|
| <Notes of table> (A) Inorganic solid electrolyte LLT: Li_{0.33}La_{0.55}TiO₃ (average particle diameter: 3.25 µm, manufactured by Toshima Manufacturing Co., Ltd.) Li-P-S: Li-P-S-based glass synthesized above (B): Polymer B-1 to B-16 and T-1 to T-4: Polymers B-1 to B-16 and T-1 to T-4 described above. Polymers B-1, 2, 4, 5, 9, 11, 12, and 16 were used in a solid form. "Parts by mass" in the table indicates the parts by mass of the solid contents. (C): Active material (C) (Positive electrode) indicates a positive electrode active material, and (C) (Negative electrode) indicates a negative electrode active material. LCO: LiCoO₂ (lithium cobalt oxide) NMC: LiNi_{1/3}Co_{1/3}Mn_{1/3}O₂ (lithium nickel manganese cobalt oxide) NCA: LiNi_{0.85}Co_{0.10}Al_{0.05}O₂ (lithium nickel cobalt aluminum oxide) (E): Conductive auxiliary agent AB: Acetylene black VGCF: Trade name, carbon nanofiber manufactured by Showadenkosya Co., Ltd. (D): Dispersion medium Nos. S-1 to S-16 and Nos. T'-1 to T'-4 were all used in an amount of 18 parts by mass. "-" indicates that the corresponding component is not included. | | | | | | | | | | | |

### <Production of solid electrolyte-containing sheet>

The solid electrolyte composition S-1 prepared above was applied onto a 20 µm-thick stainless steel (SUS) foil which was a collector using a bar coater. The SUS foil was installed on a hot plate as a lower surface, the solid electrolyte composition was heated at 80°C for one hour to remove the dispersion medium, and, furthermore, pressed at a pressure of 300 MPa, thereby producing a solid electrolyte-containing sheet No. 101 having a solid electrolyte layer. Solid electrolyte-containing sheets Nos. 102 to 116 and c11 to c14 were produced using the solid electrolyte compositions Nos. S-2 to S-16 and T'-1 to T'-4 shown in Table 2 in the same manner as the production of the solid electrolyte-containing sheet No. 101. Here, Nos. 101 to 115 are the present invention, No. 116 is a reference example, and Nos. c11 to c14 are comparative examples. The thicknesses of the solid electrolyte layers or the active material layers of the obtained solid electrolyte-containing sheets are shown in Table 2. In addition, the respective sheets were all 50 mm in height and 30 mm in width.

### <Test>

For the solid electrolyte-containing sheets produced above, a bonding property test and a scratch resistance test were carried out. Hereinafter, a test method will be described, and the results are summarized in Table 3.

### [Bonding property test]

On the obtained solid electrolyte-containing sheet, a bonding property test was carried out on the basis of JIS K 5600-5-6: 1999. The solid electrolyte-containing sheet was installed so that the solid electrolyte layer or the active material layer faced upwards. Double sided pressure-sensitive adhesive tape (40 mm in height and 20 mm in width) (trade name: NICETACK NW-10, manufactured by Nichiban Co., Ltd.) was stretched on the surface of the SUS foil and fixed to a side experiment table (model No.: SSE-127, manufactured by Sibata Scientific Technology Ltd.). Six slits were provided in the solid electrolyte layer at intervals of 2 mm using a small-sized cutter knife (model No.: 215BS, manufactured by Olfa Corporation) and a cutter guide (cutter guide for 1 mm and 2 mm, manufactured by T. P Giken). After that, six slits extending straight at the right angle with respect to the above-described six slits were provided. An approximately 75 mm-high and 15 mm-wide piece was cut out from transparent pressure-sensitive adhesive tape (trade name: CELLOTAPE (registered trademark), model No.: CT405AP-24, manufactured by Nichiban Co., Ltd.) and stretched on a portion of the solid electrolyte layer in which the slits were provided in a grid shape, and the tape was well attached thereto by pressing the tape with fingers. The tape was pulled away at an angle of 75° three minutes after the attachment. The surface was visually observed, and the bonding property was evaluated on the basis of ranks 0 to 5 of JIS 5600-5-6: 1999. Meanwhile, ranks "0", "1", and "2" are pass levels of the present test.

### - Evaluation standards -

Rank 0: The edges of cuts were smooth and no grid cells were peeled off.

Rank 1: Small pieces of the coated film peeled off from the intersections of cuts were observed. The proportion of the coated film affected in cross cut portions did not clearly exceed 5%.

Rank 2: The solid electrolyte layer or the active material layer was peeled off along the edges of cuts and/or from the intersections. The proportion of the coated film affected in cross cut portions clearly exceeded 5%, but did not exceed 15%.

Rank 3: Large pieces of the solid electrolyte layer or the active material layer was partially or fully peeled off along the edges of cuts and/or from the intersections, and/or cells in many portions were peeled off. The proportion of the coated film affected in cross cut portions clearly exceeded 15%, but did not exceed 35%.

Rank 4: Large pieces of the solid electrolyte layer or the active material layer was partially or fully peeled off along the edges of cuts and/or from the intersections, and/or several cells were peeled off. The proportion of the coated film affected in cross cut portions did not clearly exceed 35%.

Rank 5: The solid electrolyte layer or the active material layer was peeled off to an extent to which the bonding property could not be classified into even Rank 4.

### [The cross cut portion refers to a portion in which the slit provided using the cutter knife extends straight]

### [Scratch resistance test]

On the obtained solid electrolyte-containing sheet, a scratch resistance test was carried out using a rubbing tester 151B (trade name, manufactured by Imoto Machinery Co., Ltd.) and, as steel wool, BON STAR STEEL WOOL BOND POUND VOLUME (trade name, model No.: B-204, grade: #0000, manufactured by Bonstar Sales Co., Ltd.).

The solid electrolyte-containing sheet prepared above was installed on the table of the rubbing tester so that the solid electrolyte layer or the active material layer faced upwards. Double sided pressure-sensitive adhesive tape (40 mm in height and 20 mm in width) (trade name: NICETACK NW-10, manufactured by Nichiban Co., Ltd.) was stretched on the surface of the SUS foil and fixed to the table of the rubbing tester. A movable portion in which the steel wool (#0000) had been mounted was reciprocally moved 20 times on the solid electrolyte-containing sheet at a rate of 10 times of reciprocation per minute in an operation width of 20 mm with a load of 200 g. The surface was visually observed, and the scratch resistance was evaluated using the following A to F. Meanwhile, evaluations "C" and higher are pass levels of the present test.

### - Evaluation standards -

A: The number of scratches is 0 or more and less than 10
B: The number of scratches is 10 or more and less than 20
C: The number of scratches is 20 or more and less than 30
D: The number of scratches is 30 or more and less than 40
E: The number of scratches is 40 or more and less than 50
F: The number of scratches is 50 or more

**[Table 3]**

| Sheet No. | Solid electrolyte composition | Kind of sheet | Layer thickness (µm) | Bonding property test | Scratch resistance test |
|---|---|---|---|---|---|
| 101 | S-1 | Solid electrolyte sheet | 130 | 2 | C |
| 102 | S-2 | Solid electrolyte sheet | 126 | 2 | C |
| 103 | S-3 | Positive electrode sheet | 129 | 1 | B |
| 104 | S-4 | Positive electrode sheet | 119 | 1 | B |
| 105 | S-5 | Positive electrode sheet | 142 | 1 | B |
| 106 | S-6 | Negative electrode sheet | 129 | 2 | C |
| 107 | S-7 | Negative electrode sheet | 130 | 2 | C |
| 108 | S-8 | Solid electrolyte sheet | 131 | 1 | B |
| 109 | S-9 | Positive electrode sheet | 136 | 2 | C |
| 110 | S-10 | Positive electrode sheet | 140 | 0 | A |
| 111 | S-11 | Positive electrode sheet | 125 | 2 | C |
| 112 | S-12 | Solid electrolyte sheet | 137 | 2 | C |
| 113 | S-13 | Positive electrode sheet | 132 | 0 | A |
| 114 | S-14 | Positive electrode sheet | 128 | 1 | C |
| 115 | S-15 | Negative electrode sheet | 132 | 2 | C |
| 116 | S-16 | Negative electrode sheet | 120 | 2 | C |
| c11 | T'-1 | Positive electrode sheet | 121 | 3 | F |
| c12 | T'-2 | Negative electrode sheet | 128 | 4 | F |
| c13 | T'-3 | Positive electrode sheet | 130 | 5 | F |
| c14 | T'-4 | Negative electrode sheet | 136 | 4 | F |

### <Notes of table>

The thickness of the base material is not included in the layer thickness.

As is clear from Table 3, the comparative solid electrolyte-containing sheets Nos. c11 to c14 produced from the solid electrolyte compositions containing the polymer not satisfying the regulation of the present invention as the binder all failed in terms of the bonding property and the scratch resistance.

In contrast, it was found that the solid electrolyte-containing sheets produced from the solid electrolyte composition of the embodiment of the present invention containing the polymer satisfying the regulation of the present invention as the binder all exhibited a favorable bonding property and favorable scratch resistance.

The present invention has been described together with the embodiment; however, unless particularly specified, the present inventors do not intend to limit the present invention to any detailed portion of the description and consider that the present invention is supposed to be broadly interpreted within the concept and scope of the present invention described in the claims.

The present application claims priority on the basis of JP2017-027332 filed on February 16, 2017 in Japan and JP2017-114186 filed on June 9, 2017 in Japan, the contents of which are incorporated herein by reference.

### Explanation of References

1: negative electrode collector
2: negative electrode active material layer
3: solid electrolyte layer
4: positive electrode active material layer
5: positive electrode collector
6: operation portion
10: all-solid state secondary battery

## Claims

1. A solid electrolyte composition comprising:
an inorganic solid electrolyte (A) having a conductivity of an ion of a metal belonging to Group I or II of the periodic table; and
a binder (B),
wherein the binder (B) includes a polymer satisfying the following condition (1) or (2),
(condition 1) A Young's modulus is 0.003 GPa or more and less than 0.2 GPa and a breaking elongation is 300% to 700%, and
(condition 2) A Young's modulus is 0.2 to 2 GPa and a breaking elongation is 10% to 1,000%,
wherein the polymer included in the binder (B) is selected from the group consisting of polyurethane, polyester, acrylic polymer, polycarbonate, a hydrogenated acrylonitrile butadiene rubber and a polyamide,
wherein Young's modulus is obtained by producing a test specimen described in JIS K 7161 "Plastics-Determination of Tensile Properties" from a binder solution and measuring the tensile elastic modulus and tensile strain at break or nominal tensile strain at break described in the above standard, and
the breaking elongation is obtained by producing a test specimen described in JIS K 7161 "Plastics-Determination of Tensile Properties" from a binder solution and measuring the tensile elastic modulus and tensile strain at break or nominal tensile strain at break described in the above standard.

2. The solid electrolyte composition according to claim 1,
wherein the polymer satisfies the following condition 3,
(condition 3) A Young's modulus is 0.2 to 2 GPa and a breaking elongation is 300% to 700%.

3. The solid electrolyte composition according to claim 1 or 2,
wherein a yield elongation of the polymer is 10% or more.

4. The solid electrolyte composition according to any one of claims 1 to 3, further comprising:
an active material (C).

5. The solid electrolyte composition according to any one of claims 1 to 4, further comprising:
a dispersion medium (D).

6. A solid electrolyte-containing sheet comprising:
an inorganic solid electrolyte (A) having a conductivity of an ion of a metal belonging to Group I or II of the periodic table; and
a binder (B),
wherein the binder (B) includes a polymer satisfying the following condition (1) or (2),
(condition 1) A Young's modulus is 0.003 GPa or more and less than 0.2 GPa and a breaking elongation is 300% to 700%, and
(condition 2) A Young's modulus is 0.2 to 2 GPa and a breaking elongation is 10% to 1,000%,
wherein the polymer included in the binder (B) is selected from the group consisting of polyurethane, polyester, acrylic polymer, polycarbonate, a hydrogenated acrylonitrile butadiene rubber and a polyamide,
wherein Young's modulus is obtained by producing a test specimen described in JIS K 7161 "Plastics-Determination of Tensile Properties" from a binder solution and measuring the tensile elastic modulus and tensile strain at break or nominal tensile strain at break described in the above standard, and
the breaking elongation is obtained by producing a test specimen described in JIS K 7161 "Plastics-Determination of Tensile Properties" from a binder solution and measuring the tensile elastic modulus and tensile strain at break or nominal tensile strain at break described in the above standard.

7. The solid electrolyte-containing sheet according to claim 6, further comprising:
an active material (C).

8. An all-solid state secondary battery comprising:
a positive electrode active material layer;
a negative electrode active material layer; and
a solid electrolyte layer,
wherein at least one layer of the positive electrode active material layer, the negative electrode active material layer, or the solid electrolyte layer is the solid electrolyte-containing sheet according to claim 6 or 7.

9. A method for manufacturing a solid electrolyte-containing sheet, the method comprising:
a step of applying the solid electrolyte composition according to any one of claims 1 to 5 on a base material.

10. A method for manufacturing an all-solid state secondary battery, the method comprising:
manufacturing an all-solid state secondary battery using the manufacturing method according to claim 9.

## Patentansprüche

1. Festelektrolytzusammensetzung, umfassend:
einen anorganischen Festelektrolyten (A) mit einer Leitfähigkeit für ein Ion eines Metalls, das zur Gruppe I oder II des Periodensystems gehört; und
ein Bindemittel (B),
worin das Bindemittel (B) ein Polymer umfasst, das die folgende Bedingung (I) oder (2) erfüllt.
(Bedingung 1) das Young-Modul beträgt 0,003 GPa oder mehr und weniger als 0,2 GPa und die Bruchdehnung beträgt 300 % bis 700 %, und
(Bedingung 2) das Young-Modul beträgt 0,2 bis 2 GPa und die Bruchdehnung beträgt 10 % bis 1.000 %,
worin das in dem Bindemittel (B) enthaltene Polymer ausgewählt ist aus der Gruppe, bestehend aus Polyurethan, Polyester, Acrylpolymer, Polycarbonat, hydrierten Acrylnitril-Butadienkautschuk und Polyamid,
worin das Young-Modul erhalten wird durch Herstellen eines Teststücks, das in JIS K 7161 "Kunststoffe-Bestimmung der Zugeigenschaften" beschrieben ist, aus einer Bindemittellösung und Messen des Zugelastizitätsmoduls und der Zugbelastung beim Bruch oder der einer nominalen Zugbelastung beim Bruch, die im vorstehenden Standard beschrieben ist, und
die Bruchdehnung erhalten wird durch Herstellen eines Teststücks, das in JIS K 7161 "Kunststoffe-Bestimmung der Zugeigenschaften" beschrieben ist, aus einer Bindemittellösung und Messen des Zugelastizitätsmoduls und der Zugbelastung beim Bruch oder der nominalen Zugbelastung beim Bruch, die im vorstehenden Standard beschrieben ist.

2. Festelektrolytzusammensetzung gemäß Anspruch 1,
worin das Polymer die folgende Bedingung 3 erfüllt,
(Bedingung 3) das Young-Modul beträgt 0,2 bis 2 GPa und die Bruchdehnung beträgt 300 % bis 700 %.

3. Festelektrolytzusammensetzung gemäß Anspruch 1 oder 2, worin die Dehnbarkeit des Polymers 10 % oder mehr beträgt.

4. Festelektrolytzusammensetzung gemäß irgendeinem der Ansprüche 1 bis 3, ferner umfassend:
ein Aktivmaterial (C).

5. Festelektrolytzusammensetzung gemäß irgendeinem der Ansprüche 1 bis 4, ferner umfassend:
ein Dispersionsmedium (D).

6. Festelektrolyt-haltiges Blatt, umfassend:
einen anorganischen Festelektrolyten (A) mit einer Leitfähigkeit für ein Ion eines Metalls, das zur Gruppe I oder II des Periodensystems gehört, und
ein Bindemittel (B),
worin das Bindemittel (B) ein Polymer umfasst, das die folgende Bedingung (1) oder (2) erfüllt:
(Bedingung 1) das Young-Modul beträgt 0,003 GPa oder mehr und weniger als 0,2 GPa und die Bruchdehnung beträgt 300 % bis 700 %, und
(Bedingung 2) das Young-Modul beträgt 0,2 bis 2 GPa und die Bruchdehnung beträgt 10 % bis 1.000 %,
worin das in dem Bindemittel (B) enthaltene Polymer ausgewählt ist aus der Gruppe, bestehend aus Polyurethan, Polyester, Acrylpolymer, Polycarbonat, hydrierten Acrylnitril-Butadienkautschuk und Polyamid,
worin das Young-Modul erhalten wird durch Herstellen eines Teststücks, das in JIS K 7161 "Kunststoffe-Bestimmung der Zugeigenschaften" beschrieben ist, aus einer Bindemittellösung und Messen des Zugelastizitätsmoduls und der Zugbelastung beim Bruch oder der nominalen Zugbelastung beim Bruch, die im vorstehenden Standard beschrieben ist, und
die Bruchdehnung erhalten wird durch Herstellen eines Teststücks, das in JIS K 7161 "Kunststoffe-Bestimmung der Zugeigenschaften" beschrieben ist, aus einer Bindemittellösung und Messen des Zugelastizitätsmoduls und der Zugbelastung beim Bruch oder der nominalen Zugbelastung beim Bruch, die im vorstehenden Standard beschrieben ist.

7. Festelektrolyt-haltiges Blatt, gemäß Anspruch 6, ferner umfassend:
ein Aktivmaterial (C).

8. Festphasen-Sekundärbatterie, umfassend:
eine Positivelektroden-Aktivmaterialschicht;
eine Negativelektroden-Aktivmaterialschicht; und
eine Festelektrolytschicht,
worin zumindest eine von der Positivelektroden-Aktivmaterialschicht, der Negativelektroden-Aktivmaterialschicht oder der Festelektrolytschicht das Festelektrolyt-haltige Blatt gemäß Anspruch 6 oder 7 ist.

9. Verfahren zur Herstellung eines Festelektrolyt-haltigen Blatts, wobei das Verfahren umfasst:
einen Schritt zum Auftragen der Festelektrolytzusammensetzung gemäß irgendeinem der Ansprüche 1 bis 5 auf ein Basismaterial.

10. Verfahren zur Herstellung einer Festphasen-Sekundärbatterie, wobei das Verfahren umfasst:
Herstellen einer Festphasen-Sekundärbatterie unter Verwendung des Herstellungsverfahrens gemäß Anspruch 9.

## Revendications

1. Composition d'électrolyte solide comprenant :
un électrolyte solide inorganique (A) présentant une conductivité d'un ion d'un métal appartenant au groupe I ou II du tableau périodique ; et
un liant (B),
dans laquelle le liant (B) comporte un polymère satisfaisant la condition suivante (1) ou (2),
(condition 1) un module de Young est de 0,003 GPa ou plus et inférieur à 0,2 GPa et un allongement à la rupture est de 300 % à 700 %, et
(condition 2) un module de Young est de 0,2 à 2 GPa et un allongement à la rupture est de 10 % à 1000 %,
dans laquelle le polymère inclus dans le liant (B) est choisi dans le groupe constitué par le polyuréthane, le polyester, le polymère acrylique, le polycarbonate, un caoutchouc acrylonitrile-butadiène hydrogéné et un polyamide,
dans laquelle le module de Young est obtenu par production d'une éprouvette décrite dans JIS K 7161 « Plastics-Determination of Tensile Properties » (détermination des propriétés de traction des plastiques) à partir d'une solution de liant et par mesure du module d'élasticité en traction et de l'effort de traction à la rupture ou de l'effort de traction nominal à la rupture décrits dans la norme ci-dessus, et
l'allongement à la rupture est obtenu par production d'une éprouvette décrite dans JIS K 7161 « Plastics-Determination of Tensile Properties » (détermination des propriétés de traction des plastiques) à partir d'une solution de liant et mesure du module d'élasticité en traction et de l'effort de traction à la rupture ou de l'effort de traction nominal à la rupture décrits dans la norme ci-dessus.

2. Composition d'électrolyte solide selon la revendication 1,
dans laquelle le polymère satisfait la condition suivante 3,
(condition 3) un module de Young est de 0,2 à 2 GPa et un allongement à la rupture est de 300 % à 700 %.

3. Composition d'électrolyte solide selon la revendication 1 ou la revendication 2,
dans laquelle un allongement à la limite d'élasticité du polymère est de 10 % ou plus.

4. Composition d'électrolyte solide selon l'une quelconque des revendications 1 à 3, comprenant en outre :
un matériau actif (C).

5. Composition d'électrolyte solide selon l'une quelconque des revendications 1 à 4, comprenant en outre :
un milieu de dispersion (D).

6. Feuille contenant un électrolyte solide comprenant :
un électrolyte solide inorganique (A) présentant une conductivité d'un ion d'un métal appartenant au groupe I ou II du tableau périodique ; et
un liant (B),
dans laquelle le liant (B) comporte un polymère satisfaisant la condition suivante (1) ou (2),
(condition 1) un module de Young est de 0,003 GPa ou plus et inférieur à 0,2 GPa et un allongement à la rupture est de 300 % à 700 %, et
(condition 2) un module de Young est de 0,2 à 2 GPa et un allongement à la rupture est de 10 % à 1000 %,
dans laquelle le polymère inclus dans le liant (B) est choisi dans le groupe constitué par le polyuréthane, le polyester, le polymère acrylique, le polycarbonate, un caoutchouc acrylonitrile-butadiène hydrogéné et un polyamide,
dans laquelle le module de Young est obtenu par production d'une éprouvette décrite dans JIS K 7161 « Plastics-Determination of Tensile Properties » (détermination des propriétés de traction des plastiques) à partir d'une solution de liant et par mesure du module d'élasticité en traction et de l'effort de traction à la rupture ou de l'effort de traction nominal à la rupture décrits dans la norme ci-dessus, et
l'allongement à la rupture est obtenu par production d'une éprouvette décrite dans JIS K 7161 « Plastics-Determination of Tensile Properties » (détermination des propriétés de traction des plastiques) à partir d'une solution de liant et par mesure du module d'élasticité en traction et de l'effort de traction à la rupture ou de l'effort de traction nominal à la rupture décrits dans la norme ci-dessus.

7. Feuille contenant un électrolyte solide selon la revendication 6, comprenant en outre :
un matériau actif (C).

8. Batterie secondaire entièrement solide comprenant :
une couche de matériau actif d'électrode positive ;
une couche de matériau actif d'électrode négative ; et
une couche d'électrolyte solide,
dans laquelle au moins une couche de la couche de matériau actif d'électrode positive, de la couche de matériau actif d'électrode négative, ou de la couche d'électrolyte solide est la feuille contenant l'électrolyte solide selon la revendication 6 ou la revendication 7.

9. Procédé de fabrication d'une feuille contenant un électrolyte solide, le procédé comprenant :
une étape d'application de la composition d'électrolyte solide selon l'une quelconque des revendications 1 à 5 sur un matériau de base.

10. Procédé de fabrication d'une batterie secondaire entièrement solide, le procédé comprenant :
la fabrication d'une batterie secondaire tout solide au moyen du procédé de fabrication selon la revendication 9.
